(19)

**Europäisches Patentamt**
**European Patent Office**
**Office européen des brevets**

(11) **EP 4 507 210 A1**

(12) **EUROPEAN PATENT APPLICATION**

(43) Date of publication:
**12.02.2025 Bulletin 2025/07**

(21) Application number: **24193843.0**

(22) Date of filing: **09.08.2024**

(51) International Patent Classification (IPC):
**H04B 7/0426** (2017.01)   **H04B 7/06** (2006.01)

(52) Cooperative Patent Classification (CPC):
**H04B 7/0663; H04B 7/0443; H04B 7/0617**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.08.2023 US 202363518449 P**

(71) Applicant: **Intel Corporation**
**Santa Clara, CA 95054 (US)**

(72) Inventors:
- **CHOI, Yang-Seok**
  **Portland, 97229 (US)**
- **DHAKAL, Sagar**
  **Belmont, 94002 (US)**
- **ELFADIL, Husam**
  **Cedar Park, 78613 (US)**

- **HEWAVITHANA, Thushara**
  **Tempe, 85284 (US)**
- **LI, Xiaofeng**
  **San Jose, 95134 (US)**
- **LU, Peng**
  **Elk Grove, 95757 (US)**
- **SCHRECK, Jan**
  **Scotts Valley, 95066 (US)**
- **TETZLAFF, Thomas**
  **Portland, 97209 (US)**
- **VANAPARTHY, Santhosh K.**
  **Santa Clara, 95054 (US)**
- **WHINNETT, Nicholas**
  **Bath, BA1 7BA (GB)**
- **ZHANG, Yuzhou**
  **San Diego, 92130 (US)**

(74) Representative: **Viering, Jentschura & Partner mbB**
**Patent- und Rechtsanwälte**
**Am Brauhaus 8**
**01099 Dresden (DE)**

(54) **VIRTUAL RADIO ACCESS NETWORK (VRAN) RADIO UNIT (RU) SPATIAL COMPRESSION SCHEME**

(57)     A method of spatial compression in a Radio Unit for MIMO, wherein the spatial compression is determined from a number of antennas to a number of streams in one or more stages, the method includes computing an antenna covariance matrix from a received signal over multiple resource elements; performing a matrix decomposition based on the computed covariance matrix to produce one or more compression vector; and generating a spatially-compressed signal by performing spatial compression on the matrix decomposition in one or more stages based.

FIG. 2A

**Description**

**BACKGROUND**

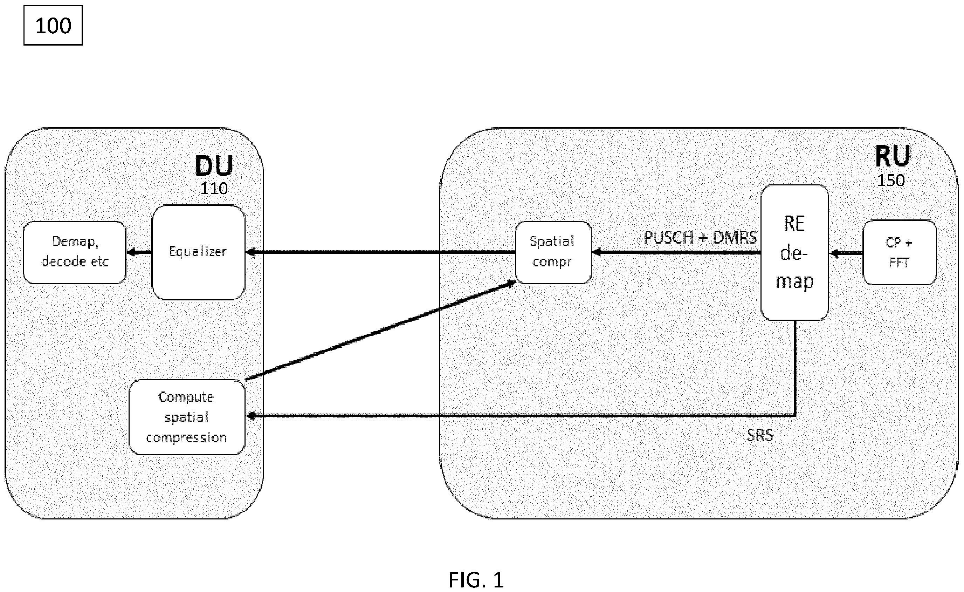

The legacy so-called "7-2" split (see 100, e.g., FIG. 1) may have orthogonal frequency division multiplexing (OFDM) (e.g., inverse fast fourier transfrom (iFFT), fast fourier transform (FFT), cyclic prefix (CP), etc.) processing, and beam weight application, located in the Radio Unit 150 (RU), with remaining functionality (e.g., beam-weight calculation, channel estimation, equalization) in the Distributed Unit 110 (DU), see FIG. 1. This split may be the typical split assumed for virtual radio access network (VRAN) deployments and may have the most functionality implemented in the DU 110.

In this split, the beam weight calculations in the DU 110 may be performed based on channel estimates obtained from the Sounding Reference Signal (SRS) received on the uplink. For beamforming in the uplink direction, the beamforming weights calculated in the DU 110 may be transferred over the Fronthaul (FH) interface to the RU 150. The RU 150 applies these weights to the Resource Elements (REs) carrying the Physical Uplink Shared Channel (PUSCH) and associated DMRS, and in this way "spatial compression" may be obtained. For example, in the case of 64 antennas, and uplink beamforming to form 16 beams, 16 "streams" may then be sent over the fronthaul interface rather than 64. This may result in substantial bandwidth savings over the fronthaul, which may be important when considering the operational expenditure (OPEX) cost of the physical links over which the fronthaul is transferred.

However, there may be some drawbacks with this approach. Such drawbacks may include one or more of the following:.

- SRS is sent from the User Equipment (UE) only periodically, and the period can be large in relation to the rate of change of the channel conditions, particularly in higher mobility scenarios. In this case, when used for beamforming weight calculation, the resultant SRS channel estimates may be out of date, resulting in degraded beamforming performance, unless additional streams are sent in FH to mitigate the impact of UE mobility.
- Uplink beamforming based in SRS received from UEs may not take into account the interference environment present when UEs transmit a physical uplink shared channel (PUSCH). It has been shown through extensive simulations that this results in some degradation when using Interference Rejection Combining (IRC) receivers compared to other beamforming approaches (for example based on Demodulation Reference Signals (DMRS)).
- The received SRS may be required to be transferred across the fronthaul interference from the RU to the DU for all (e.g., 64) antennas. In VRAN systems, PUSCH loading can be quite low on average across many cells, but UEs may still be sending SRS such that SRS loading does not benefit from averaging across cells in the same way. In this case, the fronthaul loading due to SRS becomes a significant overhead and contributes significantly to total fronthaul bandwidth requirement.

**BRIEF DESCRIPTION OF THE DRAWINGS**

FIG. 1 is a network and flow diagram illustrating a distributed unit (DU) and a radio unit (RU).
FIGS. 2A and 2B each include a network diagram of a DU and RU and an illustrative process for DMRS-based spatial compression in a RU in accordance with one or more example embodiments of the present disclosure.
FIG. 3 is a network diagram of a DU and RU and an illustrative process of spatial compression applied to PUSCH and DMRS in accordance with one or more example embodiments of the present disclosure.
FIGS. 4A and 4B each include a network diagram of a DU and RU and an illustrative process of spatial compression in accordance with one or more example embodiments of the present disclosure.
FIG. 5 is a graph of simulated PUSCH performance of embodiments described herein as applied to PUSCH spatial compression compared to the cases of legacy SRS-based compression, and no spatial compression in accordance with one or more example embodiments of the present disclosure.
FIG. 6 is a network diagram of a DU and RU and an illustrative process of spatial compression in accordance with one or more example embodiments of the present disclosure.
FIGS. 7A and 7B are graphs of simulated performance of SRS spatial compression in 1 stage in accordance with one or more example embodiments of the present disclosure.
FIG. 8 is a graph of simulated performance of SRS spatial compression in 2 stages in accordance with one or more example embodiments of the present disclosure.

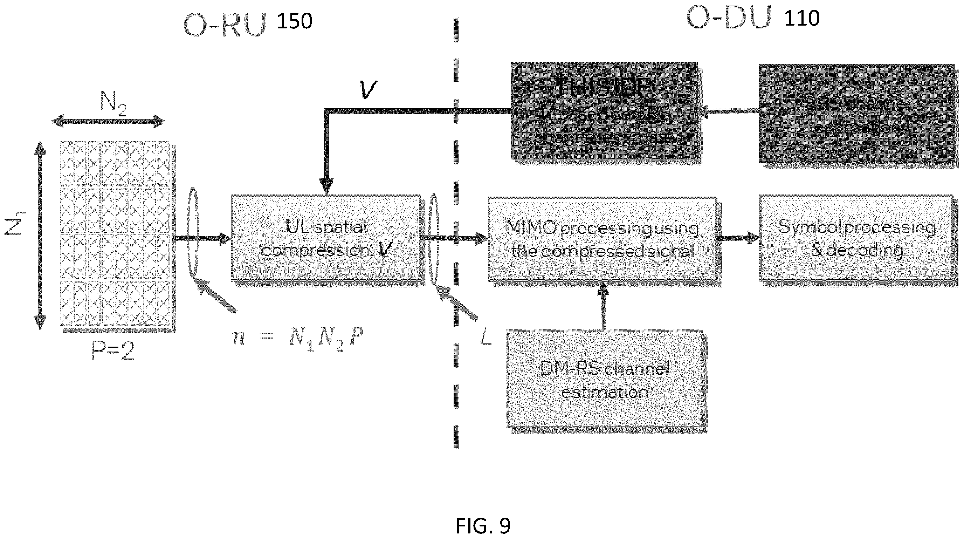

FIG. 9 is a network diagram of a DU and RU and an illustrative process of uplink spatial compression in accordance with one or more example embodiments of the present disclosure.
FIG. 10 is a graph of the Cumulative Distribution Function of the normalized spectral efficiency for the algorithms described herein.

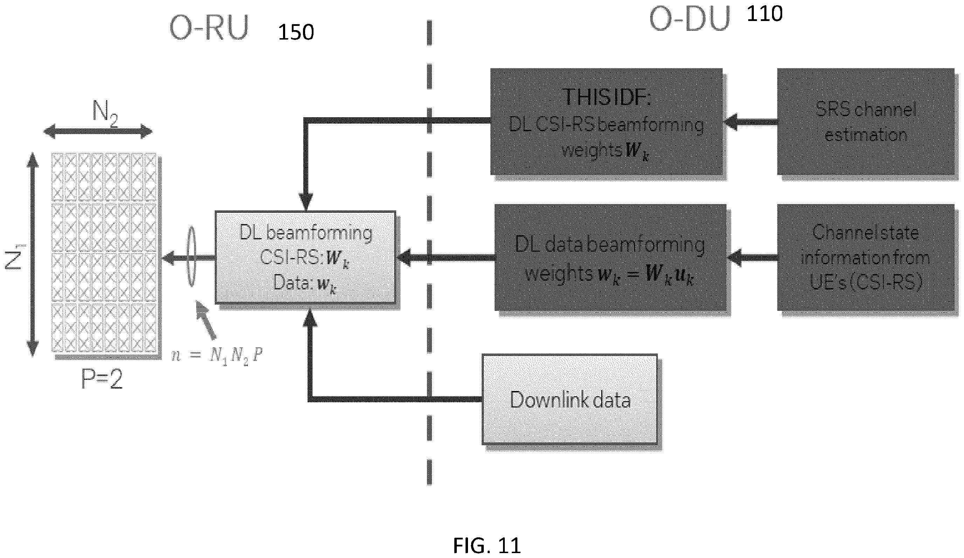

FIG. 11 is a network diagram of a DU and RU and an illustrative process of downlink spatial compression in accordance with one or more example embodiments of the present disclosure.

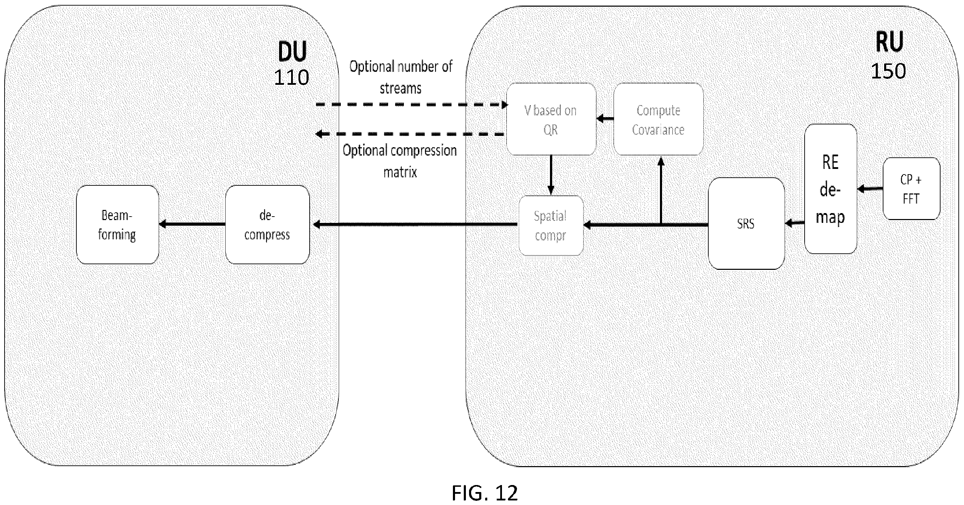

FIG. 12 is a network diagram of a DU and RU and an illustrative process of uplink spatial compression in accordance with one or more example embodiments of the present disclosure.

FIG. 13 is a block diagram of a radio architecture of components a wireless network in accordance with some examples.

FIG. 14 schematically illustrates a wireless network 1400 in accordance with various embodiments.

FIG. 15 is a block diagram illustrating components, according to some example embodiments.

FIG. 16 is a block diagram illustrating a high-level view of Open RAN architecture.

FIG. 17 is a block diagram illustrating Open RAN logical architecture corresponding to the Open RAN architecture of FIG. 17.

Fig. 18 illustrates a wireless network in accordance with various embodiments.

Fig. 19 illustrates a simplified block diagram of artificial (AI)-assisted communication between a user-equipment and a RAN, in accordance with various embodiments.

Fig. 20 is illustrates a flow diagram of a process according to at least one example of the present disclosure.

Fig. 21 is illustrates a flow diagram of a process according to at least one example of the present disclosure.

## DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A or B" and "A/B" mean (A), (B), or (A and B).

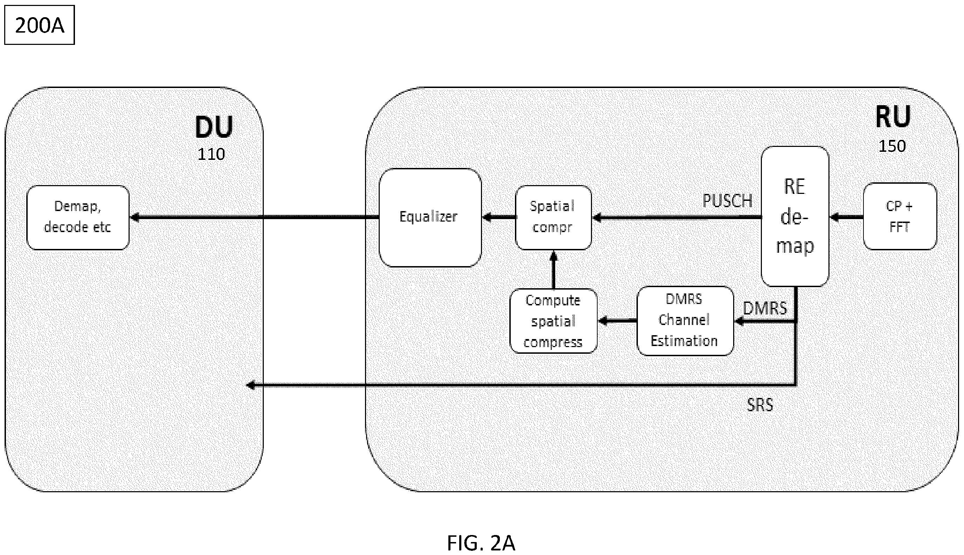

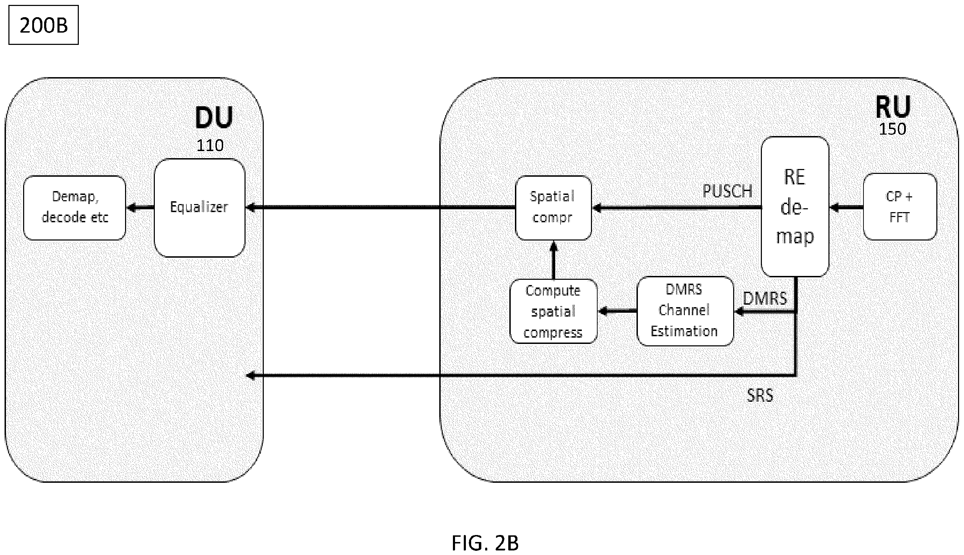

Embodiments herein relate to a spatial compression scheme defined for the RU. FIGS. 2A and 2B are examples of DMRS-based spatial compression. In system 200a of FIG. 2A, DMRS-based spatial compression is in RU 150 with an equalizer 120. In system 200b of FIG. 2B, DMRS-based spatial compression in RU 150 with an equalizer 120 in DU 110. This scheme may be for SRS. Embodiments may be based on or related to antenna covariance matrix estimation, followed by a decomposition (e.g., QR or eigen) in order to obtain spatial compression weights. There may be multiple (e.g., two) stages of compression in embodiments herein. One stage may operate as described below. The second, which may differ from the first in that it may relate to taking the output of the first compression stage as input, may operate on multiple interleaved blocks of resource elements. Optionally the DU 110 may indicate to the RU 150 the number of streams to compress to, and the set of REs the covariance matrix is to be estimated over. This embodiment may apply to one or both of the SRS or some other other reference signal with UEs separated by cyclic shift. Note that, as a special case, only the second stage of compression may be employed in some embodiments.

The compression scheme may provide one or more of the following example advantages:

- Overcomes the problems of latency with high mobility as discussed in problem statement
- Minimizes transfer of functionality from DU 110 to RU 150
- Passes both signal and interference subspaces to DU 110. This allows the DU 110 to optimally (in the case that the full subspaces are passed), or sub-optimally (in case partial subspaces are passed), process both wanted and interfering signals for example by means of joint processing over multiple RUs 150. It also enables sub-optimal approaches for receiving wanted signals from a single RU 150 at a time, by means of interference suppression/cancellation techniques, for example Interference Rejection Combining (IRC). DURU functionality is well defined and associated RU 150 impact on wireless performance is well known

- RU 150 functionality is well defined and associated RU 150 impact on wireless performance is well known
- Allows spatial compression of SRS unlike other solutions.
- May provide higher achievable compression ratios over front-haul interface for a given wireless performance.
- May retains complexity reduction in SRS for receiver processing in DU, for example channel estimation is performed for 24 streams, rather than 64 antennas which may be required with no SRS spatial compression.
- Provides enhanced spatial-denoising performance (leading to superior quality of SRS channel estimates).

Use of embodiments may be inferred by observing the signals on the O-RAN-defined fronthaul interface for a given stimulus at the RU antennas. By comparing the channel characteristic of the SRS stimulus with that of the effective channel (after compression) measured over the fronthaul, it can be established that the RU has applied two-stage spatial compression per the present invention. Furthermore, if by observing the fronthaul interface it is established that control for number of streams is passed from DU to RU, or if the applied compression matrix is sent from RU to DU separately for multiple stages, or for interleaved groups of REs, these are additional features of embodiments herein that may be directly detected. In the latter case, further inspection of the applied compression matrix may serve to confirm the spatial compression approach per the present invention.

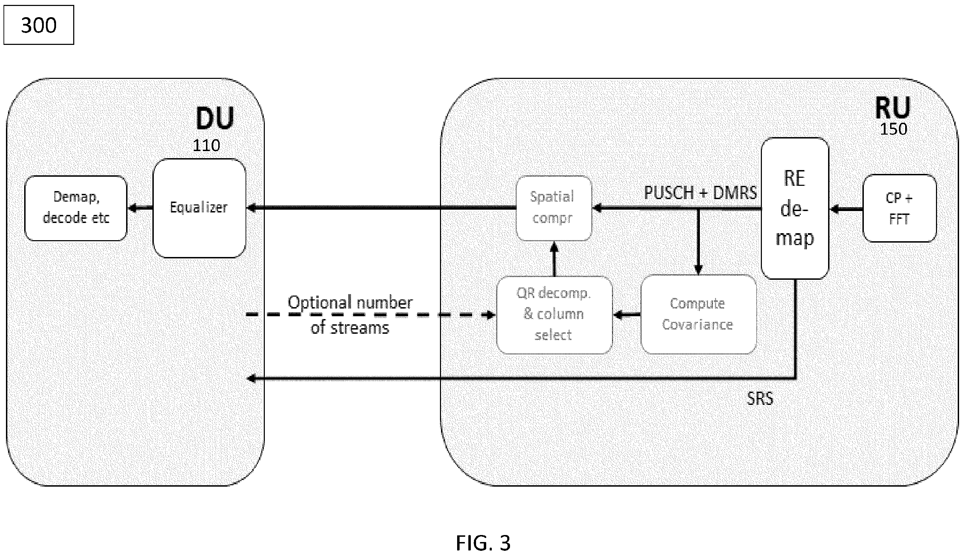

An example of one embodiment, as applied to the PUSCH, is shown in FIG. 3.

The antenna covariance matrix is computed over a set of REs R. The set may be implicit (e.g. the first 3 symbols of the PUSCH+DMRS allocation and all subcarriers), or may be controlled from the DU (not shown in Figure 3), such that the covariance (and resulting spatial compression) is performed for multiple groups of subcarriers. The covariance for PUSCH is calculated as

$$C_{PUSCH} = \sum_{r \in R} y_{PUSCH}[r] y_{PUSCH}[r]^H$$

where $y_{PUSCH}[r]$ is a received vector for resource element $r$, of length equal to the number of antennas $N_A$. $C_{PUSCH}$ is therefore a matrix with dimension $N_A \times N_A$.

Next a decomposition of $C_{PUSCH}$ is performed. Preferably this makes use of an approach wherein the QR decomposition of a subset of the columns of $C_{PUSCH}$ is used. However other decompositions can be considered during the specification stage, for example QR over the full set of columns of $C_{PUSCH}$, QR with sorting, single value decomposition (SVD)/Eigen-decomposition, etc. The spatial compression for PUSCH then is based on beamforming matrix $W$ which is formed from $N_S$ of the columns of $Q$ (if QR or sorted QR decomposition is used), or from the $N_S$ principal singular vectors/eigen-vectors in case SVD/eigen-decomposition is used. $N_S$ is the number of streams after spatial compression. This may be fixed (e.g. at 10) or may be controlled from the DU (dashed line in FIG. 3). For resource element r the spatial compression step is given by:

$$z_{PUSCH}[r] = W^H y_{PUSCH}[r]$$

In addition to spatial compression of $N_A$ antenna streams into a lower number of streams, $N_S$, this also has the added benefit of spatial filtering of the noise that falls outside the signal and interference subspace.

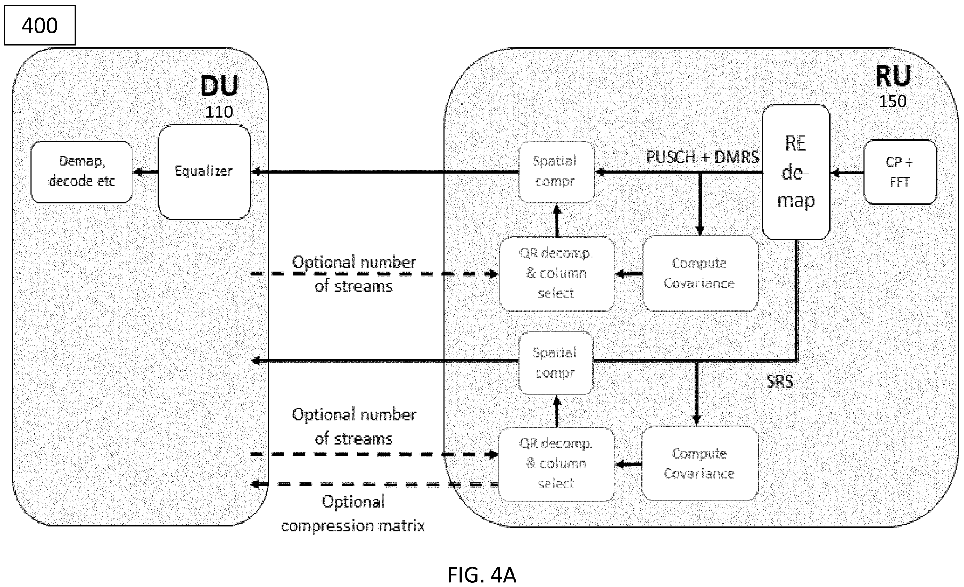

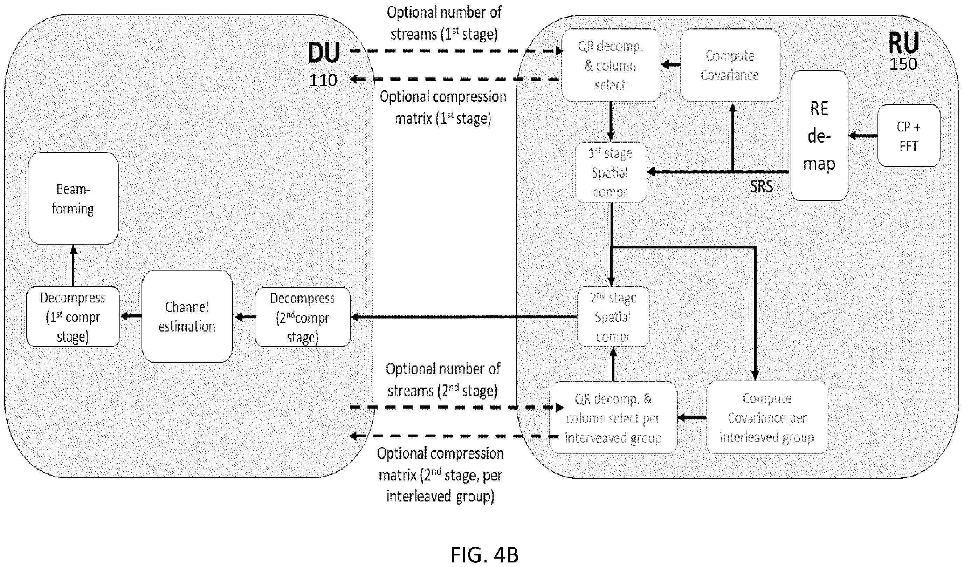

FIG. 4 shows an example embodiment related to spatial compression of both PUSCH and SRS.

For the SRS shown in Figure 4, for the first stage compression, the covariance (in this case $C_{SRS}$) will be calculated, and compression performed, separately for each symbol carrying SRS, and for each SRS "comb". The decomposition algorithm may be an approach wherein the QR decomposition of a subset of the columns of $C_{SRS}$ is used, however other decompositions can be considered during the specification stage. The number of streams after spatial compression $N_{S1}$ may be fixed (e.g. at 24 for SRS) or may be controlled from the DU (e.g., as shown by the dashed line in Figure 4).

For the second stage of compression, which may take the output of the first stage as its input, interleaved groups of REs are taken. The number of required groups is determined by the number of cyclic shifts multiplexed together, and the values of the used cyclic shifts. For example, for 5G, for SRS using comb 4, there are 12 possible cyclic shifts. After multiplication with the base Zadoff-Chu sequence, each transmitted cyclic shift in the frequency domain is a complex phasor. The number of whole periods the phasor rotates over within 12 REs is given by the cyclic shift (CS) value. For example, cyclic shift 0 is a constant and hence there are zero periods. Cyclic shift 1 rotates once over 12 REs, hence there is a single period. Cyclic shift 2 has two periods over 12 REs, etc.

If all CS are present, then the resulting sum of transmitted signals is periodic over 12 REs. Therefore, in this case we can take every 12th RE, and for this interleaved group, if the channel remains unchanged over frequency, then the same value would be observed at each received RE. With a non-stationary channel (or equivalent channel after the first compression step) in the frequency domain, then some variation will occur across the received samples for this group, but due to the channel alone, not due to the interaction of the different CS phases. This allows for a higher degree of compression than for the first stage of compression. In this example case (comb4, all CS assigned), we have 12 interleaved groups, and we compress each group independently, each to $N_{S2}$ streams.

Note that if not all CS are occupied, then, depending on the positions of the assigned CS, the sum over CS may have a periodicity less than 12 REs, such that fewer than 12 interleaved groups of REs would be required. Table 1 shows an example of the interleaved nature of the groups, 4 CS were selected such that the periodicity is 4. In this example the 2nd stage compresses 4 groups of subcarriers separately (depicted with different fillings).

| SRS sub-car | UE1 | UE2 | UE3 | UE4 |
|:---:|:---:|:---:|:---:|:---:|
| 0 | x[0] | x[1] | x[2] | x[3] |
| 4 | x[1] | x[2] | x[3] | x[0] |
| 8 | x[2] | x[3] | x[0] | x[1] |
| 12 | x[3] | x[0] | x[1] | x[2] |
| 16 | x[0] | x[1] | x[2] | x[3] |
| 20 | x[1] | x[2] | x[3] | x[0] |
| 24 | x[2] | x[3] | x[0] | x[1] |
| 28 | x[3] | x[0] | x[1] | x[2] |

**Table 1 - Comb 4 example, Tx sequences per UE for interleaved groups**

As in the first-stage compression, the second-stage compression is based on decomposition of the covariance, but in this case the covariance is obtained independently for each interleaved group.

For SRS, decompression may be performed in the DU see FIG. 3.

The second stage of compression needs to be decompressed before channel estimation. As interleaved sets of REs have different compressions applied, this decompression is required before the SRS channel estimation in DU, as the SRS channel estimation requires the effective channel to be consistent across all REs. The compression matrix $W_i$ for each interleaved set $i$ of REs, may be passed over the fronthaul interface from RU to DU as shown in Figure 3. The decompression for each interleaved set $i$ can then take the form:

$$z_i = W_i y_i$$

where $z_i$ is a decompressed vector with dimension $N_{S1} \times 1$ obtained from a compressed $N_{S2} \times 1$ vector $y_i$ by pre-multiplication with the $N_{S1} \times N_{S2}$ compression matrix $W_i$. The input $y_i$ to the decompression are the compressed SRS signals.

The multiple sets of interleaved decompressed vectors $z_i$ are then de-interleaved to form $z$.

At this point, SRS channel estimation may take place based on $z$, as shown in Figure 3, and optionally beamforming weight calculation.

For decompressing the first stage of compression, the compression matrix $W$ may be passed over the fronthaul interface from RU to DU as shown in Figure 3. The decompression can take the form:

$$u = Wv$$

where $u$ is a decompressed vector with dimension $N_A \times 1$ obtained from a compressed $N_{S1} \times 1$ vector $v$ by pre-multiplication with the $N_A \times N\_S1$ compression matrix $W$. The input $v$ to the decompression may be the compressed SRS signals themselves, channel estimates obtained from the (first-stage) compressed SRS signals, or beamforming weights (for example for the downlink) obtained from the (first-stage) compressed SRS signals.

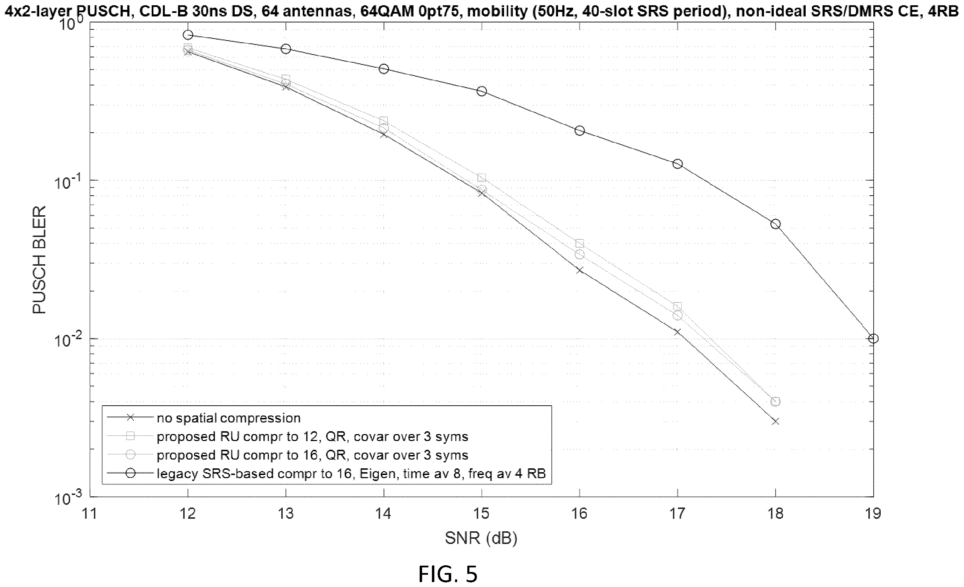

In terms of wireless performance with spatial compression of PUSCH, example simulation results comparing an approach related to embodiments herein as opposed to a legacy SRS-based approach (without SRS spatial compression), and with the case of no spatial compression, are provided in FIG. 5. These results are for a scenario including interference and assume an IRC receiver for mitigating interference. They also assume high mobility/low SRS period. Both of these characteristics (interference and mobility) may be challenging for the legacy 7-2 SRS-based approach. The number of wanted signal layers is 8, and with 16 streams the PUSCH performance of the legacy approach falls far short of that of the example embodiment herein, even when the embodiment herein uses only 12 streams. Indeed, the embodiments herein with 16 or 12 streams may have wireless performance that approaches the case of no spatial compression being used at all (in which case data for all 64 antennas is passed over fronthaul).

**Embodiment 2**

As well as providing bandwidth compression over the fronthaul interface, as will be seen in the simulation results below, spatial compression can also provide so-called "spatial de-noising". This is where, by eliminating the dimensions associated with the noise sub-space, the signal to noise ratio can be enhanced.

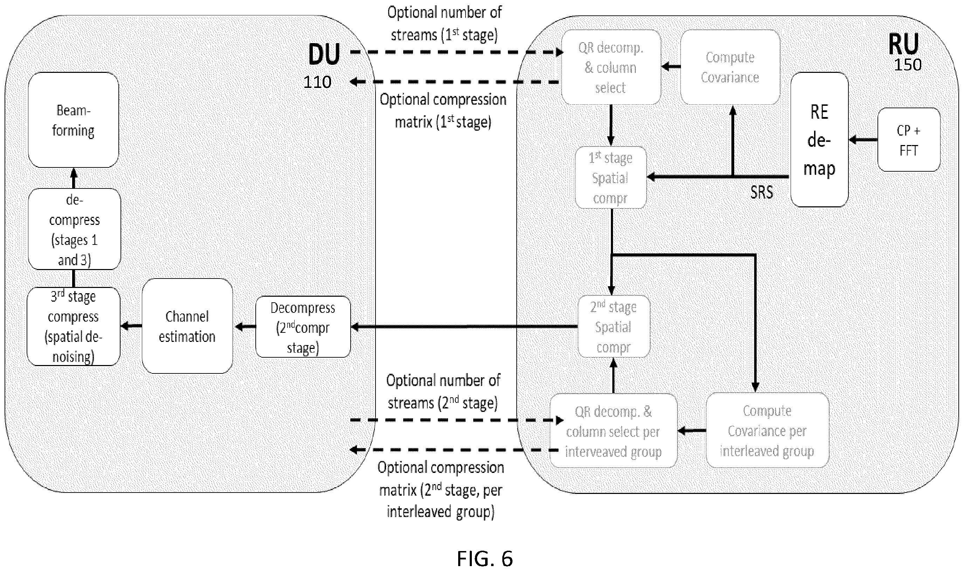

In a second embodiment, a third compression stage is added after the SRS channel estimation stage in the DU, followed by decompression (for stages 1 and 3, the decompression can be performed individually for each stage, or combined). As the output of the SRS channel estimation only represents the channel for a single UE port, a higher degree of spatial compression/de-noising can be used, thus obtaining further benefits of improved SNR on the channel estimates. This is shown in FIG. 6.

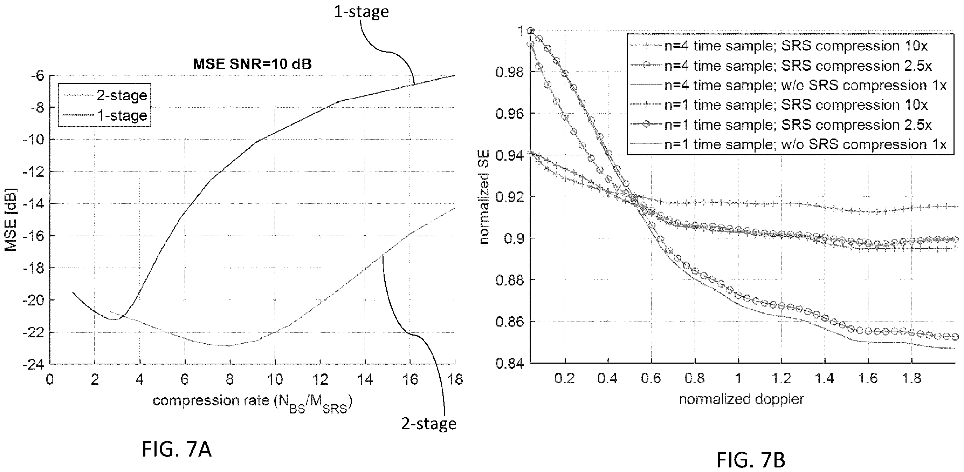

In terms of wireless performance with spatial compression of SRS, example simulation results are presented in FIGS. 7A and 7B, for a scenario with 64 antennas, CDL-B channel model, and Signal to Noise ratio 10dB. These show the mean squared error (MSE) of the SRS channel estimate versus compression ratio, for the compression scheme of AF2767 (red line), and an example of the described two stage compression per the first embodiment herein (blue line). These results demonstrate that the described scheme can offer a better MSE (~-23dB versus ~-21dB) for a higher degree of compression (~8x versus ~3x). Embodiments herein may therefore have very significant advantages in terms of both FH bandwidth, and spatial de-noising benefits. theoretical PUSCH spectral efficiency versus Doppler spread in the channel, assuming SRS-based spatial compression of PUSCH from 64 antennas to 16 ports. The spectral efficiency is plotted for multiple scenarios, including the number of SRS time-samples used to derive the PUSCH spatial compression (1 or 4), and compression characteristics of the SRS (none, 2.5x, or 10x spatial compression). Compared to the case of no SRS spatial compression (lines with no markers), compression by a factor of 2.5 (marker "o") (so reducing SRS from 64 antennas to 24 ports) results in no loss of spectral efficiency. For higher Dopplers (so higher mobility, where SRS latency becomes more of an issue), increasing SRS spatial compression to 10x actually results in improved spectral efficiency (lines with marker "+").

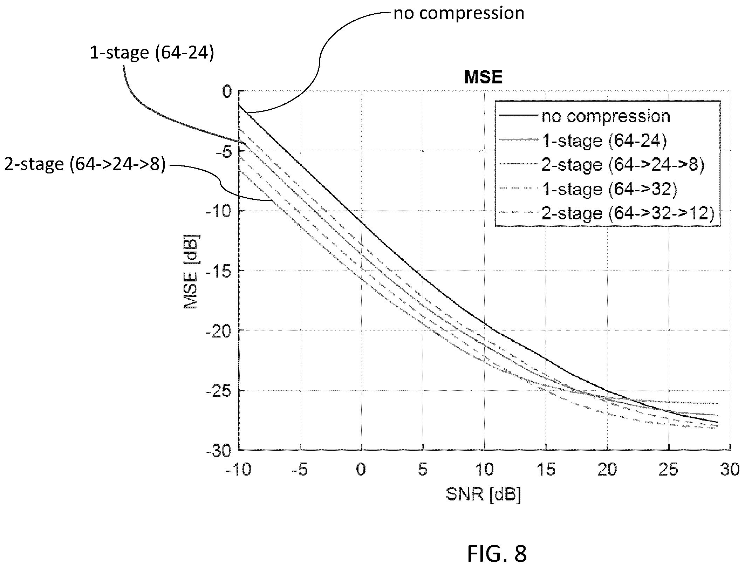

For the same configuration, FIG. 8 shows an example of the MSE of SRS channel estimates for 1-stage and 2-stage compression compared to no compression. We observe that compression improves the MSE up to 3 dB and 5 dB for 1-stage and 2-stage compression, respectively. With appropriate compression, gains can be observed over the whole depicted SNR range. Due to improved denoising 2-stage compression outperforms 1-stage compression. Both compression schemes outperform the case with no compression, which is due to improved denoising described above.

Above we described *linear* compression and decompression schemes. The compression and decompression operations can also be achieved by more general functions. In that case the compressed signal could be given by a function

$$z_{PUSCH}[r] = f_{compress}(C_{PUSCH}, y_{PUSCH}[r])$$

And similar for SRS, we can define $z_{SRS}[r] = f_{compress}(C_{SRS}, y_{SRS}[r])$ and $f_{decompres}(z_{SRS}[r])$.

The functions $f_{compress}(\cdot)$ and $f_{decompress}(\cdot)$, can be derived in various ways including learned using AI/MI, methods. In the latter case efficient compression methods can be learned for each deployment scenario.

The follow regards, spatial compression, which is used between a remote radio unit (RRU) and the baseband processing unit (BBU). Similarly, downlink CSI-RS ports are used to reduce the number of required downlink reference signals. See Embodiment 1 and 2 below for an illustration. In both cases, the spatial dimensions are compressed from the number of receiver antennas to a much smaller number of spatial streams.

An important quantity when computing spatial compression weights are channel covariance matrices. Let us define the channel covariance matrix of user $k$ as the outer product,

$$C_k = \sum_{s \in S} h_k(s) h_k(s)^H,$$

with $h_k(s) \in \mathbb{C}^n$ the channel vector from user $k$ to the receiver, the spectral resource $s$ and $n$ the number of antennas. The channel is sampled on spectral resources $S = \{s_1, \ldots, s_{nS}\}$, e.g., subcarriers in an OFDM based system. In a single user scenario if, the number of spatial streams is limited to $n_s$ streams, for some arbitrary but fixed user $k$, the optimal spatial compression weights are given by the singular vectors corresponding to the largest $n_s$ singular values of $C_k$.

In a multi-user scenario, the channel covariance matrix over a group of users $\mathcal{K} = \{1, 2, \ldots, K\}$ is

$$C(\mathcal{K}) = \sum_{k \in \mathcal{K}} C_k.$$

6

In multi-user scenarios finding optimal spatial compression weights is not a simple task. Diverse requirements of users with varying channel conditions need to be considered.

To maximize the system throughput the optimal spatial compression weights, are given by the singular vectors corresponding to the largest singular values of $C(\mathcal{K})$. However, with this approach per user performance requirements cannot be guaranteed. For instance, if users in $\mathcal{K}$ experience different channel conditions (e.g. a wide spread of path gains or a mix of line of sight and non-line of sight users), preference will be given to users with better channel conditions. Hence, cell-edge UE's will be punished.

Furthermore, computing singular values and vectors is a complex task, and it is desirable to implement lower complexity alternatives.

Again, spatial compression is a well-known approach to reduce the computational complexity and signaling overhead of massive MIMO algorithms by reducing the dimensionality of the signal prior processing. Spatial compression can also improve the signal quality; by coherently combining the signal over many antennas, noise and interference are filtered. Depending on the implementation and application, spatial compression may also be referred to as beamforming, beam compression, spatial filtering, or precoding.

In the mMIMO regime the channel covariance matrix the

$$C_k = \sum_{s \in S} h_k(s) h_k(s)^H$$

typically can be approximated by a low rank matrix. Let $Q \in \mathbb{C}^{n \times l}$ be an orthonormal matrix. We say that $Q$ approximates the range of $C \in \mathbb{C}^{n \times n}$, if the following holds,

$$\frac{\|(I_n - QQ^H)C\|_2}{\|C\|_2} \le \varepsilon,$$

with $\varepsilon > 0$ a specified small tolerance. A simple baseline solution to estimate the range of a rank $l$ matrix is to perform the QR decomposition $C = Q_0 R$. The range will then be given by the first $l$ columns of $Q_0$. However, this solution requires us to first compute $C$ and then perform a full QR decomposition. The following accurate and efficient algorithm:

    1. Pick $m$ columns of $C$, calculate their values and store in $Z \in \mathbb{C}^{n \times m}$
    2. Compute QR decomposition of $Z = QR$
    3. **Output:** first $l$ columns $Q_{:l} \in \mathbb{C}^{l \times m}$

The range of $C$ is approximated by the output (i.e. first $l$ columns of $Q$). The columns of $C$ to be copied in $Z$ can be either randomly or deterministically (e.g. equidistant columns or first $m$ columns) determined.

Assume the following signal is received

$$y(s) = \sum_{k \in \mathcal{K}} \widehat{h}_k(s) \, x_k(s) + n.$$

where $s \in \{s_1, ..., s_{nS}\}$ is a spectral resource, e.g., subcarriers in an OFDM based system, $\hat{h}_k(s) \in \mathbb{C}^n$ is the channel from transmitter $k$ to the receiver, $n$ is the number of antennas, the signal transmitted by transmitter $k$ is $x_k(s)$ and $n$ is additive noise.

In performing a spatial compression of the signal of $K$ users indexed by $k \in \{1,2, ..., K\} = \mathcal{K}$, it is assumed for each user $k$ a channel estimate $h_k(s) \approx \hat{h}_k(s)$ is available. To simplify notation, the time index of the channel is omitted, but introduced again later when needed.

For a single user, the optimal $l_k$-dimensional spatial compression for user $k \in \mathcal{K}$ can be derived by the singular value decomposition of $C_k$, defined above. Precisely, the spatial compression can be given by the $l_k$ singular vectors $V = [v_1, ... , v_{lk}]$ corresponding to the largest $l_k$ singular values. Applied to the channel of user $k$ the sum of the energy of the effective channel is maximized:

$$\max_{\boldsymbol{V}} \sum_{s} \|\boldsymbol{V}^H \boldsymbol{h}_k(s)\|_2.$$

In the multi-user case, the signal is compressed from $n$ spatial diemensions to $L = \Sigma_k l_k$ spatial dimensions. To compute a $n \times L$ spatial compression matrix $\boldsymbol{V}$ for multiple users an SVD of $\boldsymbol{C}(\mathcal{K}) = \sum_{k \in \mathcal{K}} \boldsymbol{C}_k$ can be used. For the sake of completeness we define Algorithm 0 which will also serve as baseline for Algorithm 1, 2 and 3 defined below.

**Algorithm 0** - **Spatial compression jointly over all users:**

Given channel estimates $\boldsymbol{h}_k(s)$ for all user $k \in \mathcal{K}$ and the total number of streams $L$. The algorithm finds a spatial compression matrix $\boldsymbol{V}$.:

- Initialize $\boldsymbol{V}$ an empty matrix
- Compute a matrix $\boldsymbol{C} = f([\boldsymbol{h}_k]_{i \in \mathcal{K}})$
- For $l = 1, ..., L$, repeat

    1. $\boldsymbol{y'}$ = get a new compression vector
    2. Append $\boldsymbol{y'}$ to $\boldsymbol{V}$
    3. Increment $m_k$

Function $f(\cdot)$ may calculate the covariance matrix $\boldsymbol{C}(\mathcal{K})$ defined above or any other $n \times n$ matrix, possibly a function of the channels $\boldsymbol{h}_k(s)$. In step 1 of any of the algorithms defined in this section could be used. However, any other matrix factorization algorithm can be used instead, e.g. SVD.

**Algorithm 1 - Spatial compression with $l_k$ streams per user:**

Given channel estimates $\boldsymbol{h}_k(s)$ for all user $k \in \mathcal{K}$ and the total number of streams $L$. The algorithm finds a spatial compression matrix $\boldsymbol{V}$ with $l = \Sigma_k l_k$ columns:

- Initialize $\boldsymbol{V}$ an empty matrix, set $m_k = 0$ for all $k \in \mathcal{K}$
- For $k \in \mathcal{K}$, repeat

    ∘ If $m_k < l_k$, do

        ▪ $\boldsymbol{y'}$ = get a new compression vector
        ▪ Append $\boldsymbol{y'}$ to $\boldsymbol{V}$
        ▪ Increment $m_k$

Algorithm 1 cycles through the users and successively add mutually orthogonal columns of the spatial compression matrix $\boldsymbol{V}$. For each user one column at a time is added. After adding a column for each user, it starts with the first user again to add additional columns. The algorithm finds a spatial compression matrix $\boldsymbol{V}$ that maximizes the energy of the effective channel $\Sigma_s \|\boldsymbol{V}^H \boldsymbol{h}_k(s)\|_2$ jointly for all users $k \in \mathcal{K}$.
In Step 1 any algorithm defined in herein can be used, other algorithms are not precluded. By selecting a different value $l_k$ for different users, the number of columns contributed to $\boldsymbol{V}$ by each user can be controlled.

**Algorithm 2** - **Spatial compression with per user requirements:**

Given channel estimates $\boldsymbol{h}_k(s)$, a threshold $\rho_k$ and a maximum number of streams per user $l_k$, the algorithm finds a spatial compression matrix $\boldsymbol{V}$.

- Initialize $\boldsymbol{V}$ an empty matrix, set $m_k = 0$ for all $k \in \mathcal{K}$
- For $k \in \mathcal{K}$, repeat

    ∘ If $m_k < l_k$ and $\Sigma_s \|\boldsymbol{V}^H \boldsymbol{h}_k(s)\|_2 / \|\boldsymbol{h}_k(s)\|_2 \leq \rho_k$, do

    1. $y'$ = get a new compression vector
    2. Append y' to $V$
    3. Increment $m_k$

Algorithm 2 adds per user requirements and stops adding columns for any user of its requirement is satisfied. The algorithm finds a spatial compression matrix $V$ that maximizes the energy of the effective channel $V^H h_k(s)$ jointly for all users $k \in \mathcal{K}$, while trying (if possible) to achieve an effective channel power of each user that is above the threshold $\rho_k$, that is $\Sigma_s \| V^H h_k(s) \|_2 / \| h_k(s) \|_2 > \rho_k$.

**Algorithm 3** - **Spatial compression with per user requirements using Rayleigh quotients**

Given channel estimates $h_k(s)$ for all user $k \in \mathcal{K}$ and the total number of streams $L$. The algorithm finds a spatial compression matrix $V$ with $l = \Sigma_k l_k$ columns:

-    Initialize $V$ an empty matrix, set $m_k = 0$ for all $k \in \mathcal{K}$
-    Compute the first $l_k$ columns of $C_k$ and normalize
-    For $k \in \mathcal{K}$, repeat

     ◦ If $m_k < l_k$ and $\Sigma_{mk} v_{mk}^H C_k(:,0:l_k - 1) v_{mk}(0:l_k - 1,:) < \rho_k$ do

         ▪ $y'$ = get a new compression vector
         ▪ Append $y'$ to $V$
         ▪ Increment $m_k$

Algorithm 3 uses sum of Rayleigh quotients instead of effective channel power, to estimate energy captured by the selected compression matrix. Hence, the computational complexity is reduced compared to Algorithm 2. The algorithm finds a spatial compression matrix $V$ that maximizes the energy of the effective channel $V^H h_k(s)$ jointly for all users $k \in \mathcal{K}$, while trying (if possible) to reach total captured energy of each user that is at least above the threshold $\rho_k$, that is $\Sigma_{mk} v_{mk}^H C_k(:,0:l_k - 1) v_{mk}(0:l_k - 1,:) > \rho_k$. The captured energy for each user is estimated using only the first $l_k$ columns of $C_k$ to avoid calculating the full covariance.

As noted above, QR-based approaches, while having reduced complexity relative to SVD-based approaches, can exhibit a performance gap relative to SVD-based approaches. In this section, we present four techniques aimed at reducing this performance gap.

**QR with column selection of $C$ based on greedy SIR**

This approach proposes a method to select $l$ columns of covariance matrix $C$ for computing Q matrix using standard Gram-Schmidt method. Columns are selected in a greed fashion, one column per step, and at each step the chosen column has the largest signal to interference ratio (SIR) among all candidate columns. More precisely, let all the elements of $n \times n$ covariance matrix $C$ be defined as:

$$C = \begin{pmatrix} c_{1,1} & c_{1,2} & c_{1,3} & \dots & c_{1,n} \\ c_{2,1} & c_{2,2} & c_{2,3} & \dots & c_{2,n} \\ c_{3,1} & c_{3,2} & c_{3,3} & \cdots & c_{3,n} \\ \vdots & \vdots & \vdots & \cdots & \vdots \\ c_{n,1} & c_{n,2} & c_{n,3} & \cdots & c_{n,n} \end{pmatrix}$$

Next, $Q$ is computed as follows:

   1. In the first step the winner column $\pi_g(1)$ is selected as:

$$\pi_g(1) = \arg \max_k (c_{1,1}, \dots, c_{k,k}, \dots, c_{n,n})$$

   2. In each subsequent step $m = 2, \dots, l$, winner column $\pi_g(m)$ is selected as

$$\pi_g(m) = \arg \max_k \; SIR_k \; ,$$

where

$$SIR_k = \sqrt{\frac{c_{k,k}^2}{\sum_{j \in \pi_g(m-1)} \left| c_{j,k} \right|^2}}, \; k \in \{1, \dots, n\} \backslash \pi_g(m-1)$$

3. Using standard Gram-Schmidt method, Q matrix is computed from ordered columns $\pi_g(1)$, ..., $\pi_g(l)$ of **C** matrix.

**QR based on Gram-Schmidt with column sorting (QR-G w/ sorting)**

This approach calculates *l* columns of a **Q** matrix of a QR decomposition, by modifying the standard Gram-Schmidt algorithm in order to take the columns of **C** in order of least "lost" energy. Specifically, **Q** is computed as follows:

1. *Initialize* **Q** *= zeros(n,l)*
2. *calculate* **C**
3. *For i = 1:l*

$$j = \arg \max_{k=1,\dots,n} \left\| (I_n - QQ') C_k \right\|$$

$$q = (I_n - QQ') C_j$$

$$Q_i = q / \|q\|$$

A modification of the algorithms simplifies the optimization problem $j = \arg \max_k \left\| (I_n - QQ') C_k \right\|$. Instead of searching over all *k* we can search over *k = i, ..., i + K,* where $K \geq 0$ is some parameter. If *K = 0,* the algorithm is denoted as **QR-G.**

**QR-G w/ sorting and power method**

The approach adds *L > 1* iterations of the so-called power method to either the standard Gram-Schmidt algorithm, or the approach in B above (Gram-Schmidt with column sorting). In the latter case, with the additional power method steps shown in red, the algorithm becomes:

$$Initialize \; Q = zeros(n, l)$$

$$calculate \; C$$

$$For \; i = 1:l$$

$$j = \arg \max_{k=1,\dots,n} \left\| (I_n - QQ') C_k \right\|$$

$$q = (I_n - QQ') C_j$$

$$For \; l = 1:L$$

$$q = (I_n - QQ') C q$$

$$q = q / \|q\|$$

$$Q_i = q$$

A modification of the algorithms simplifies the optimization problem $j = \arg\max_k \|(I_n - QQ')C_k\|$. Instead of searching over all $k$ we can search over $k = i, ..., i + K$, where $K \geq 0$ is some parameter. If $K = 0$ the algorithm is denoted as **QR-G w/ power method.**

**QR-G w/ sorting and power method**

Another common techniques for computing QR decompositions is to use the Householder transformations. In a way similar to B above, we can add a step of column sorting in order to minimize the "lost" energy. Define $e_1$ as the vector $e_1 = (1,0,...,0)^T$ and $w_1$ as the first element of the vector $w$. For a matrix $X$ let $X_j[i:n]$ be the i-th to n-th element of the j-th column. Further $X[i:n, i:n]$ is defined as a $(n - i + 1) \times (n - i + 1)$ matrix given by the elements from the i-th to j-th column of $X$. The algorithm can be described as follows:

$$1. \quad Initialize\ \boldsymbol{Q} = \boldsymbol{I_n}$$

$$2. \quad calculate\ \boldsymbol{C}, \boldsymbol{R}_h = \boldsymbol{C}$$

$$3. \quad For\ i = 1{:}l$$

$$j = \arg\max_{k=i,...,n} \|\boldsymbol{C}_k[i{:}n]\|$$

$$\text{Swap column j and i of } R_h$$

$$\boldsymbol{w} = \boldsymbol{R}_{h,i}[i{:}n]$$

$$\boldsymbol{w} = \boldsymbol{w} - \boldsymbol{e}_1 \exp\big(i\ arg(w_1)\big)\|\boldsymbol{w}\|_2$$

$$\boldsymbol{v} = \boldsymbol{w}/\|\boldsymbol{w}\|_2$$

$$\boldsymbol{H} = \boldsymbol{I_n}$$

$$\boldsymbol{H}[i{:}n, i{:}n] = I_{n-i+1} - 2\boldsymbol{v}\boldsymbol{v}^H$$

$$\boldsymbol{R}_h = \boldsymbol{H}\boldsymbol{R}_h$$

$$\boldsymbol{Q} = \boldsymbol{Q}\boldsymbol{H}$$

$$4. \quad \text{Return } Q[:,1{:}l]$$

A modification of the algorithms simplifies the optimization problem $\arg\max_{k=i,...,n} \|\boldsymbol{C}_k[i{:}n]\|$. Instead of searching over all $k$ we can search over $k = i, ..., i + K$, where $K \geq 0$ is some parameter. If $K = 0$ the algorithm is denoted as **QR-H.**

**Embodiment 3: mMIMO uplink spatial compression**

In the uplink spatial compression reduces the spatial dimensions of the data and control channels (e.g. PUSCH, PUCCH). For O-RAN based 5G NR base station architecture shown in FIG. X, this means less fronthaul traffic (through dashed green line interface) from open radio unit (O-RU) to open distributed unit (O-DU). The uplink channel h_k between UE k and each base station receive antenna is estimate in the DU using the sounding reference symbols (SRS) embedded in UL signals.

The algorithms described above can be used to compute uplink spatial compression weights. FIG. X+1 below shows the CDF of the normalized spectral efficiency for the described algorithms. The spectral efficiency is normalized by the performance of SVD based spatial compression. The performance is depicted for M=L=8 and 16 uplink streams. Parameters for the performance evaluation are shown below in the table.

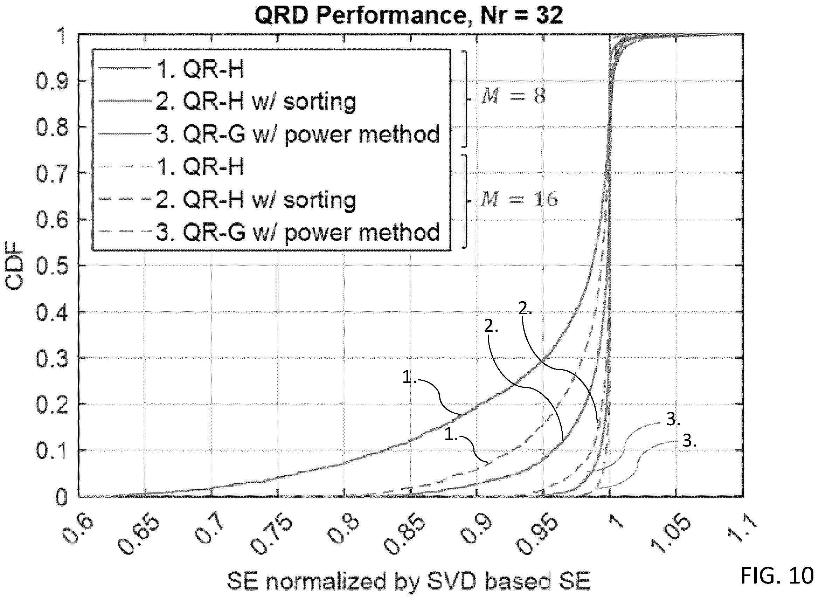

**Table 2 - Parameters for the performance evaluation reflected in graph of FIG. 10**

| | | |
|---|---|---|
| Channel | Model | CDL- A, B, D |
| | RMS Delay Spread | Uniform (0.1, 150) ns |
| | Maximum Doppler | Uniform (0, 100) Hz |
| | Bandwidth | 96 PRB COMB 2 |
| | Number of receive antennas | 32 |
| | Number of streams | 8 |
| SRS signal | Bandwidth | 96 PRB COMB 2 |
| | Loading | 8 UEs (100%) |
| | Channel Estimation | Time domain (Fixed window) |
| | Periodicity | {0, 5, 10, 20} ms |
| Beamformer | SVD based | Wideband = 88 PRB, # Streams = 8 |
| | QRD based | Wideband = 88 PRB, # Streams = 8 |
| Data signal | Bandwidth | 4 PRB |
| | Number of UEs | {2,4} |
| | Channel Estimation | Ideal |
| | Equalizer | MMSE |
| SNR | SRS signal & Data signal | Uniform (-10,30) dB |

**Embodiment 4: mMIMO downlink beamforming**

As shown in FIG. X+2, in the downlink (DL), channel adaptive beamforming is used to increase the received power of intended signals and reduce the received power of interfering signals. In 5G downlink beamforming weights are determined in two steps. First, SRS based channel estimates are used to compute a small number of $l_k$ CSI-RS antenna ports $W_k \in \mathbb{C}^{n \times l_k}$ for each user $k$. Second, the base station transmits beamformed CSI-RS to all user $k \in \mathcal{K}$. The base station receives feedback from each user that is an estimate of the effective beamformed channel $h_k^H W_k$. It then computes beamforming weights for data transmission to user $k$, given by $w_k = W_k u_k$, where $u_k$ may be computed using any beamforming strategy (e.g. zero forcing beamforming, Eigen beamforming, etc. ). The beamforming matrix $W_k$ used to define the CSI-RS antenna ports can be efficiently computed using the Algorithms 1-3 described above.

**Embodiment 5: Spatial compression of uplink SRS**

In the embodiment represnetd in FIG. X+3, algoirthms are can be applied at the RU 150 side in order to spatially compress an SRS signal. Any of the QR-based techniques described above may be used.

**SYSTEMS AND IMPLEMENTATIONS**

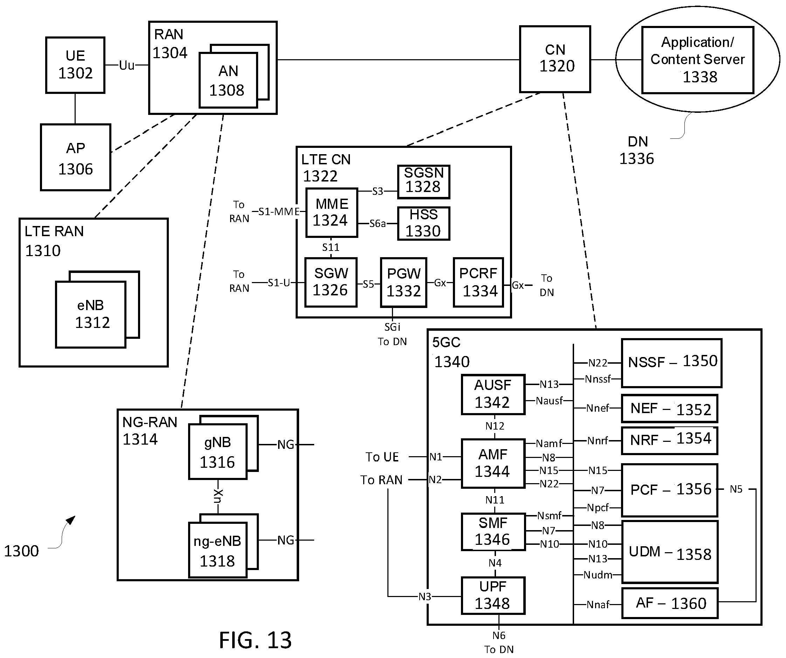

FIGS. 13-19 illustrate various systems, devices, and components that may implement aspects of disclosed embodiments.

Fig. 13 illustrates a network 1300 in accordance with various embodiments. The network 1300 may operate in a manner consistent with 3GPP technical specifications for LTE or 5G/NR systems. However, the example embodiments are not limited in this regard and the described embodiments may apply to other networks that benefit from the principles described herein, such as future 3GPP systems, or the like.

The network 1300 may include a UE 1302, which may include any mobile or non-mobile computing device designed to communicate with a RAN 1304 via an over-the-air connection. The UE 1302 may be communicatively coupled with the RAN 1304 by a Uu interface. The UE 1302 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

In some embodiments, the network 1300 may include a plurality of UEs coupled directly with one another via a sidelink interface. The UEs may be M2M/D2D devices that communicate using physical sidelink channels such as, but not limited to, PSBCH, PSDCH, PSSCH, PSCCH, PSFCH, etc.

In some embodiments, the UE 1302 may additionally communicate with an AP 1306 via an over-the-air connection. The AP 1306 may manage a WLAN connection, which may serve to offload some/all network traffic from the RAN 1304. The connection between the UE 1302 and the AP 1306 may be consistent with any IEEE 802.11 protocol, wherein the AP 1306 could be a wireless fidelity (Wi-Fi®) router. In some embodiments, the UE 1302, RAN 1304, and AP 1306 may utilize cellular-WLAN aggregation (for example, LWA/LWIP). Cellular-WLAN aggregation may involve the UE 1302 being configured by the RAN 1304 to utilize both cellular radio resources and WLAN resources.

The RAN 1304 may include one or more access nodes, for example, AN 1308. AN 1308 may terminate air-interface protocols for the UE 1302 by providing access stratum protocols including RRC, PDCP, RLC, MAC, and L1 protocols. In this manner, the AN 1308 may enable data/voice connectivity between CN 1320 and the UE 1302. In some embodiments, the AN 1308 may be implemented in a discrete device or as one or more software entities running on server computers as part of, for example, a virtual network, which may be referred to as a CRAN or virtual baseband unit pool. The AN 1308 be referred to as a BS, gNB, RAN node, eNB, ng-eNB, NodeB, RSU, TRxP, TRP, etc. The AN 1308 may be a macrocell base station or a low power base station for providing femtocells, picocells or other like cells having smaller coverage areas, smaller user capacity, or higher bandwidth compared to macrocells.

In embodiments in which the RAN 1304 includes a plurality of ANs, they may be coupled with one another via an X2 interface (if the RAN 1304 is an LTE RAN) or an Xn interface (if the RAN 1304 is a 5G RAN). The X2/Xn interfaces, which may be separated into control/user plane interfaces in some embodiments, may allow the ANs to communicate information related to handovers, data/context transfers, mobility, load management, interference coordination, etc.

The ANs of the RAN 1304 may each manage one or more cells, cell groups, component carriers, etc. to provide the UE 1302 with an air interface for network access. The UE 1302 may be simultaneously connected with a plurality of cells provided by the same or different ANs of the RAN 1304. For example, the UE 1302 and RAN 1304 may use carrier aggregation to allow the UE 1302 to connect with a plurality of component carriers, each corresponding to a Pcell or Scell. In dual connectivity scenarios, a first AN may be a master node that provides an MCG and a second AN may be secondary node that provides an SCG. The first/second ANs may be any combination of eNB, gNB, ng-eNB, etc.

The RAN 1304 may provide the air interface over a licensed spectrum or an unlicensed spectrum. To operate in the unlicensed spectrum, the nodes may use LAA, eLAA, and/or feLAA mechanisms based on CA technology with PCells/Scells. Prior to accessing the unlicensed spectrum, the nodes may perform medium/carrier-sensing operations based on, for example, a listen-before-talk (LBT) protocol.

In V2X scenarios the UE 1302 or AN 1308 may be or act as a RSU, which may refer to any transportation infrastructure entity used for V2X communications. An RSU may be implemented in or by a suitable AN or a stationary (or relatively stationary) UE. An RSU implemented in or by: a UE may be referred to as a "UE-type RSU"; an eNB may be referred to as an "eNB-type RSU"; a gNB may be referred to as a "gNB-type RSU"; and the like. In one example, an RSU is a computing device coupled with radio frequency circuitry located on a roadside that provides connectivity support to passing vehicle UEs. The RSU may also include internal data storage circuitry to store intersection map geometry, traffic statistics, media, as well as applications/software to sense and control ongoing vehicular and pedestrian traffic. The RSU may provide very low latency communications required for high speed events, such as crash avoidance, traffic warnings, and the like. Additionally or alternatively, the RSU may provide other cellular/WLAN communications services. The components of the RSU may be packaged in a weatherproof enclosure suitable for outdoor installation, and may include a network interface controller to provide a wired connection (e.g., Ethernet) to a traffic signal controller or a backhaul network.

In some embodiments, the RAN 1304 may be an LTE RAN 1310 with eNBs, for example, eNB 1312. The LTE RAN 1310 may provide an LTE air interface with the following characteristics: SCS of 15 kHz; CP-OFDM waveform for DL and SC-FDMA waveform for UL; turbo codes for data and TBCC for control; etc. The LTE air interface may rely on CSI-RS for CSI acquisition and beam management; PDSCH/PDCCH DMRS for PDSCH/PDCCH demodulation; and CRS for cell search and initial acquisition, channel quality measurements, and channel estimation for coherent demodulation/detection at the UE. The LTE air interface may operating on sub-6 GHz bands.

In some embodiments, the RAN 1304 may be an NG-RAN 1314 with gNBs, for example, gNB 1316, or ng-eNBs, for example, ng-eNB 1318. The gNB 1316 may connect with 5G-enabled UEs using a 5G NR interface. The gNB 1316 may connect with a 5G core through an NG interface, which may include an N2 interface or an N3 interface. The ng-eNB 1318 may also connect with the 5G core through an NG interface, but may connect with a UE via an LTE air interface. The gNB 1316 and the ng-eNB 1318 may connect with each other over an Xn interface.

In some embodiments, the NG interface may be split into two parts, an NG user plane (NG-U) interface, which carries traffic data between the nodes of the NG-RAN 1314 and a UPF 1348 (e.g., N3 interface), and an NG control plane (NG-C) interface, which is a signaling interface between the nodes of the NG-RAN1314 and an AMF 1344 (e.g., N2 interface).

The NG-RAN 1314 may provide a 5G-NR air interface with the following characteristics: variable SCS; CP-OFDM for DL, CP-OFDM and DFT-s-OFDM for UL; polar, repetition, simplex, and Reed-Muller codes for control and LDPC for data. The 5G-NR air interface may rely on CSI-RS, PDSCH/PDCCH DMRS similar to the LTE air interface. The 5G-NR air interface may not use a CRS, but may use PBCH DMRS for PBCH demodulation; PTRS for phase tracking for PDSCH; and tracking reference signal for time tracking. The 5G-NR air interface may operating on FR1 bands that include sub-6 GHz bands or FR2 bands that include bands from 24.25 GHz to 52.6 GHz. The 5G-NR air interface may include an SSB that is an area of a downlink resource grid that includes PSS/SSS/PBCH.

In some embodiments, the 5G-NR air interface may utilize BWPs for various purposes. For example, BWP can be used for dynamic adaptation of the SCS. For example, the UE 1302 can be configured with multiple BWPs where each BWP configuration has a different SCS. When a BWP change is indicated to the UE 1302, the SCS of the transmission is changed as well. Another use case example of BWP is related to power saving. In particular, multiple BWPs can be configured for the UE 1302 with different amount of frequency resources (for example, PRBs) to support data transmission under different traffic loading scenarios. A BWP containing a smaller number of PRBs can be used for data transmission with small traffic load while allowing power saving at the UE 1302 and in some cases at the gNB 1316. A BWP containing a larger number of PRBs can be used for scenarios with higher traffic load.

The RAN 1304 is communicatively coupled to CN 1320 that includes network elements to provide various functions to support data and telecommunications services to customers/subscribers (for example, users of UE 1302). The components of the CN 1320 may be implemented in one physical node or separate physical nodes. In some embodiments, NFV may be utilized to virtualize any or all of the functions provided by the network elements of the CN 1320 onto physical compute/storage resources in servers, switches, etc. A logical instantiation of the CN 1320 may be referred to as a network slice, and a logical instantiation of a portion of the CN 1320 may be referred to as a network sub-slice.

In some embodiments, the CN 1320 may be an LTE CN 1322, which may also be referred to as an EPC. The LTE CN 1322 may include MME 1324, SGW 1326, SGSN 1328, HSS 1330, PGW 1332, and PCRF 1334 coupled with one another over interfaces (or "reference points") as shown. Functions of the elements of the LTE CN 1322 may be briefly introduced as follows.

The MME 1324 may implement mobility management functions to track a current location of the UE 1302 to facilitate paging, bearer activation/deactivation, handovers, gateway selection, authentication, etc.

The SGW 1326 may terminate an S1 interface toward the RAN and route data packets between the RAN and the LTE CN 1322. The SGW 1326 may be a local mobility anchor point for inter-RAN node handovers and also may provide an anchor for inter-3GPP mobility. Other responsibilities may include lawful intercept, charging, and some policy enforcement.

The SGSN 1328 may track a location of the UE 1302 and perform security functions and access control. In addition, the SGSN 1328 may perform inter-EPC node signaling for mobility between different RAT networks; PDN and S-GW selection as specified by MME 1324; MME selection for handovers; etc. The S3 reference point between the MME 1324 and the SGSN 1328 may enable user and bearer information exchange for inter-3GPP access network mobility in idle/active states.

The HSS 1330 may include a database for network users, including subscription-related information to support the network entities' handling of communication sessions. The HSS 1330 can provide support for routing/roaming, authentication, authorization, naming/addressing resolution, location dependencies, etc. An S6a reference point between the HSS 1330 and the MME 1324 may enable transfer of subscription and authentication data for authenticating/authorizing user access to the LTE CN 1320.

The PGW 1332 may terminate an SGi interface toward a data network (DN) 1336 that may include an application/content server 1338. The PGW 1332 may route data packets between the LTE CN 1322 and the data network 1336. The PGW 1332 may be coupled with the SGW 1326 by an S5 reference point to facilitate user plane tunneling and tunnel management. The PGW 1332 may further include a node for policy enforcement and charging data collection (for example, PCEF). Additionally, the SGi reference point between the PGW 1332 and the data network 9 36 may be an operator external public, a private PDN, or an intra-operator packet data network, for example, for provision of IMS services. The PGW 1332 may be coupled with a PCRF 1334 via a Gx reference point.

The PCRF 1334 is the policy and charging control element of the LTE CN 1322. The PCRF 1334 may be communicatively coupled to the app/content server 1338 to determine appropriate QoS and charging parameters for service flows. The PCRF 1332 may provision associated rules into a PCEF (via Gx reference point) with appropriate TFT and QCI.

In some embodiments, the CN 1320 may be a 5GC 1340. The 5GC 1340 may include an AUSF 1342, AMF 1344, SMF 1346, UPF 1348, NSSF 1350, NEF 1352, NRF 1354, PCF 1356, UDM 1358, and AF 1360 coupled with one another over interfaces (or "reference points") as shown. Functions of the elements of the 5GC 1340 may be briefly introduced as follows.

The AUSF 1342 may store data for authentication of UE 1302 and handle authentication-related functionality. The AUSF 1342 may facilitate a common authentication framework for various access types. In addition to communicating with other elements of the 5GC 1340 over reference points as shown, the AUSF 1342 may exhibit an Nausf service-based interface.

The AMF 1344 may allow other functions of the 5GC 1340 to communicate with the UE 1302 and the RAN 1304 and to subscribe to notifications about mobility events with respect to the UE 1302. The AMF 1344 may be responsible for registration management (for example, for registering UE 1302), connection management, reachability management, mobility management, lawful interception of AMF-related events, and access authentication and authorization. The AMF 1344 may provide transport for SM messages between the UE 1302 and the SMF 1346, and act as a transparent proxy for routing SM messages. AMF 1344 may also provide transport for SMS messages between UE 1302 and an SMSF. AMF 1344 may interact with the AUSF 1342 and the UE 1302 to perform various security anchor and context management functions. Furthermore, AMF 1344 may be a termination point of a RAN CP interface, which may include or be an N2 reference point between the RAN 1304 and the AMF 1344; and the AMF 1344 may be a termination point of NAS (N1) signaling, and perform NAS ciphering and integrity protection. AMF 1344 may also support NAS signaling with the UE 1302 over an N3 IWF interface.

The SMF 1346 may be responsible for SM (for example, session establishment, tunnel management between UPF 1348 and AN 1308); UE IP address allocation and management (including optional authorization); selection and control of UP function; configuring traffic steering at UPF 1348 to route traffic to proper destination; termination of interfaces toward policy control functions; controlling part of policy enforcement, charging, and QoS; lawful intercept (for SM events and interface to LI system); termination of SM parts of NAS messages; downlink data notification; initiating AN specific SM information, sent via AMF 1344 over N2 to AN 1308; and determining SSC mode of a session. SM may refer to management of a PDU session, and a PDU session or "session" may refer to a PDU connectivity service that provides or enables the exchange of PDUs between the UE 1302 and the data network 1336.

The UPF 1348 may act as an anchor point for intra-RAT and inter-RAT mobility, an external PDU session point of interconnect to data network 1336, and a branching point to support multi-homed PDU session. The UPF 1348 may also perform packet routing and forwarding, perform packet inspection, enforce the user plane part of policy rules, lawfully intercept packets (UP collection), perform traffic usage reporting, perform QoS handling for a user plane (e.g., packet filtering, gating, UL/DL rate enforcement), perform uplink traffic verification (e.g., SDF-to-QoS flow mapping), transport level packet marking in the uplink and downlink, and perform downlink packet buffering and downlink data notification triggering. UPF 1348 may include an uplink classifier to support routing traffic flows to a data network.

The NSSF 1350 may select a set of network slice instances serving the UE 1302. The NSSF 1350 may also determine allowed NSSAI and the mapping to the subscribed S-NSSAIs, if needed. The NSSF 1350 may also determine the AMF set to be used to serve the UE 1302, or a list of candidate AMFs based on a suitable configuration and possibly by querying the NRF 1354. The selection of a set of network slice instances for the UE 1302 may be triggered by the AMF 1344 with which the UE 1302 is registered by interacting with the NSSF 1350, which may lead to a change of AMF. The NSSF 1350 may interact with the AMF 1344 via an N22 reference point; and may communicate with another NSSF in a visited network via an N31 reference point (not shown). Additionally, the NSSF 1350 may exhibit an Nnssf service-based interface.

The NEF 1352 may securely expose services and capabilities provided by 3GPP network functions for third party, internal exposure/re-exposure, AFs (e.g., AF 1360), edge computing or fog computing systems, etc. In such embodiments, the NEF 1352 may authenticate, authorize, or throttle the AFs. NEF 1352 may also translate information exchanged with the AF 1360 and information exchanged with internal network functions. For example, the NEF 1352 may translate between an AF-Service-Identifier and an internal 5GC information. NEF 1352 may also receive information from other NFs based on exposed capabilities of other NFs. This information may be stored at the NEF 1352 as structured data, or at a data storage NF using standardized interfaces. The stored information can then be re-exposed by the NEF 1352 to other NFs and AFs, or used for other purposes such as analytics. Additionally, the NEF 1352 may exhibit an Nnef service-based interface.

The NRF 1354 may support service discovery functions, receive NF discovery requests from NF instances, and provide the information of the discovered NF instances to the NF instances. NRF 1354 also maintains information of available NF instances and their supported services. As used herein, the terms "instantiate," "instantiation," and the like may refer to the creation of an instance, and an "instance" may refer to a concrete occurrence of an object, which may occur, for example, during execution of program code. Additionally, the NRF 1354 may exhibit the Nnrf service-based interface.

The PCF 1356 may provide policy rules to control plane functions to enforce them, and may also support unified policy framework to govern network behavior. The PCF 1356 may also implement a front end to access subscription information relevant for policy decisions in a UDR of the UDM 1358. In addition to communicating with functions over reference points as shown, the PCF 1356 exhibit an Npcf service-based interface.

The UDM 1358 may handle subscription-related information to support the network entities' handling of communication sessions, and may store subscription data of UE 1302. For example, subscription data may be communicated via an N8 reference point between the UDM 1358 and the AMF 1344. The UDM 1358 may include two parts, an application front end and a UDR. The UDR may store subscription data and policy data for the UDM 1358 and the PCF 1356, and/or structured data for exposure and application data (including PFDs for application detection, application request information for multiple UEs 1302) for the NEF 1352. The Nudr service-based interface may be exhibited by the UDR to allow the UDM 1358, PCF 1356, and NEF 1352 to access a particular set of the stored data, as well as to read, update (e.g., add, modify), delete, and subscribe to notification of relevant data changes in the UDR. The UDM may include a UDM-FE, which is in charge of processing credentials, location management, subscription management and so on. Several different front ends may serve the same user in different transactions. The UDM-FE accesses subscription information stored in the UDR and performs authentication credential processing, user identification handling, access authorization, registration/mobility management, and subscription management. In addition to communicating with other NFs over reference points as shown, the UDM 1358 may exhibit the Nudm service-based interface.

The AF 1360 may provide application influence on traffic routing, provide access to NEF, and interact with the policy framework for policy control.

In some embodiments, the 5GC 1340 may enable edge computing by selecting operator/3rd party services to be geographically close to a point that the UE 1302 is attached to the network. This may reduce latency and load on the network. To provide edge-computing implementations, the 5GC 1340 may select a UPF 1348 close to the UE 1302 and execute traffic steering from the UPF 1348 to data network 1336 via the N6 interface. This may be based on the UE subscription data, UE location, and information provided by the AF 1360. In this way, the AF 1360 may influence UPF (re) selection and traffic routing. Based on operator deployment, when AF 1360 is considered to be a trusted entity, the network operator may permit AF 1360 to interact directly with relevant NFs. Additionally, the AF 1360 may exhibit an Naf service-based interface.

The data network 1336 may represent various network operator services, Internet access, or third party services that may be provided by one or more servers including, for example, application/content server 1338.

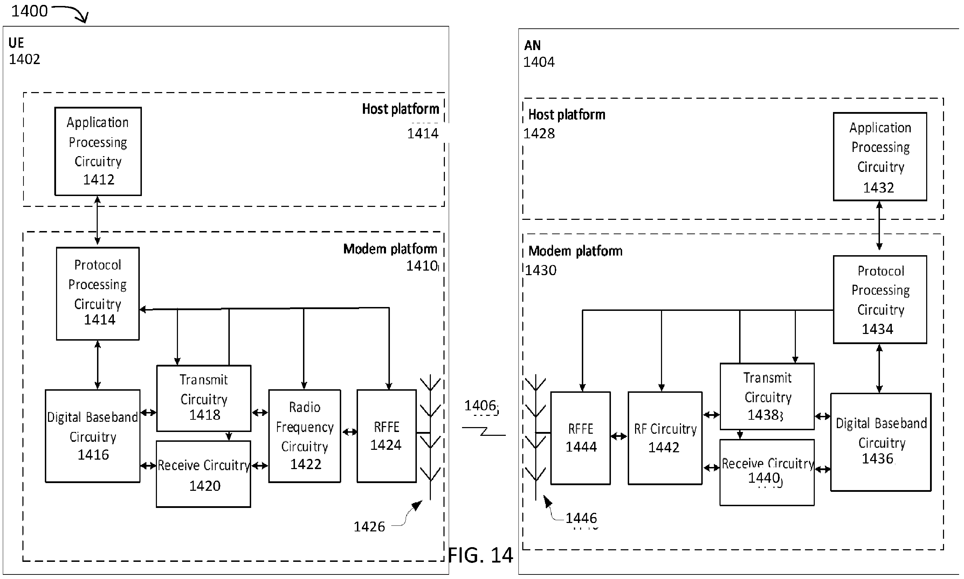

FIG. 14 schematically illustrates a wireless network 1400 in accordance with various embodiments. The wireless network 1400 may include a UE 1402 in wireless communication with an AN 1404. The UE 1402 and AN 1404 may be similar to, and substantially interchangeable with, like-named components described elsewhere herein.

The UE 1402 may be communicatively coupled with the AN 1404 via connection 1406. The connection 1406 is illustrated as an air interface to enable communicative coupling, and can be consistent with cellular communications protocols such as an LTE protocol or a 5G NR protocol operating at mmWave or sub-6GHz frequencies.

The UE 1402 may include a host platform 1408 coupled with a modem platform 1410. The host platform 1408 may include application processing circuitry 1412, which may be coupled with protocol processing circuitry 1414 of the modem platform 1410. The application processing circuitry 1412 may run various applications for the UE 1402 that source/sink application data. The application processing circuitry 1412 may further implement one or more layer operations to transmit/receive application data to/from a data network. These layer operations may include transport (for example UDP) and Internet (for example, IP) operations

The protocol processing circuitry 1414 may implement one or more of layer operations to facilitate transmission or reception of data over the connection 1406. The layer operations implemented by the protocol processing circuitry 1414 may include, for example, MAC, RLC, PDCP, RRC and NAS operations.

The modem platform 1410 may further include digital baseband circuitry 1416 that may implement one or more layer operations that are "below" layer operations performed by the protocol processing circuitry 1414 in a network protocol stack. These operations may include, for example, PHY operations including one or more of HARQ-ACK functions, scrambling/descrambling, encoding/decoding, layer mapping/de-mapping, modulation symbol mapping, received symbol/bit metric determination, multi-antenna port precoding/decoding, which may include one or more of space-time, space-frequency or spatial coding, reference signal generation/detection, preamble sequence generation and/or decoding, synchronization sequence generation/detection, control channel signal blind decoding, and other related functions.

The modem platform 1410 may further include transmit circuitry 1418, receive circuitry 1420, RF circuitry 1422, and RF front end (RFFE) 1424, which may include or connect to one or more antenna panels 1426. Briefly, the transmit circuitry 1418 may include a digital-to-analog converter, mixer, intermediate frequency (IF) components, etc.; the receive circuitry 1420 may include an analog-to-digital converter, mixer, IF components, etc.; the RF circuitry 1422 may include a low-noise amplifier, a power amplifier, power tracking components, etc.; RFFE 1424 may include filters (for example, surface/bulk acoustic wave filters), switches, antenna tuners, beamforming components (for example, phase-array antenna components), etc. The selection and arrangement of the components of the transmit circuitry 1418, receive circuitry 1420, RF circuitry 1422, RFFE 1424, and antenna panels 1426 (referred generically as "transmit/receive components") may be specific to details of a specific implementation such as, for example, whether communication is TDM or FDM, in mmWave or sub-6 gHz frequencies, etc. In some embodiments, the transmit/receive components may be arranged in multiple parallel transmit/receive chains, may be disposed in the same or different chips/modules, etc.

In some embodiments, the protocol processing circuitry 1414 may include one or more instances of control circuitry (not shown) to provide control functions for the transmit/receive components.

A UE reception may be established by and via the antenna panels 1426, RFFE 1424, RF circuitry 1422, receive circuitry 1420, digital baseband circuitry 1416, and protocol processing circuitry 1414. In some embodiments, the antenna panels 1426 may receive a transmission from the AN 1404 by receive-beamforming signals received by a plurality of antennas/antenna elements of the one or more antenna panels 1426.

A UE transmission may be established by and via the protocol processing circuitry 1414, digital baseband circuitry 1416, transmit circuitry 1418, RF circuitry 1422, RFFE 1424, and antenna panels 1426. In some embodiments, the transmit components of the UE 1404 may apply a spatial filter to the data to be transmitted to form a transmit beam emitted by the antenna elements of the antenna panels 1426.

Similar to the UE 1402, the AN 1404 may include a host platform 1428 coupled with a modem platform 1430. The host platform 1428 may include application processing circuitry 1432 coupled with protocol processing circuitry 1434 of the modem platform 1430. The modem platform may further include digital baseband circuitry 1436, transmit circuitry 1438, receive circuitry 1440, RF circuitry 1442, RFFE circuitry 1444, and antenna panels 1446. The components of the AN 1404 may be similar to and substantially interchangeable with like-named components of the UE 1402. In addition to performing data transmission/reception as described above, the components of the AN 1408 may perform various logical functions that include, for example, RNC functions such as radio bearer management, uplink and downlink dynamic radio resource management, and data packet scheduling.

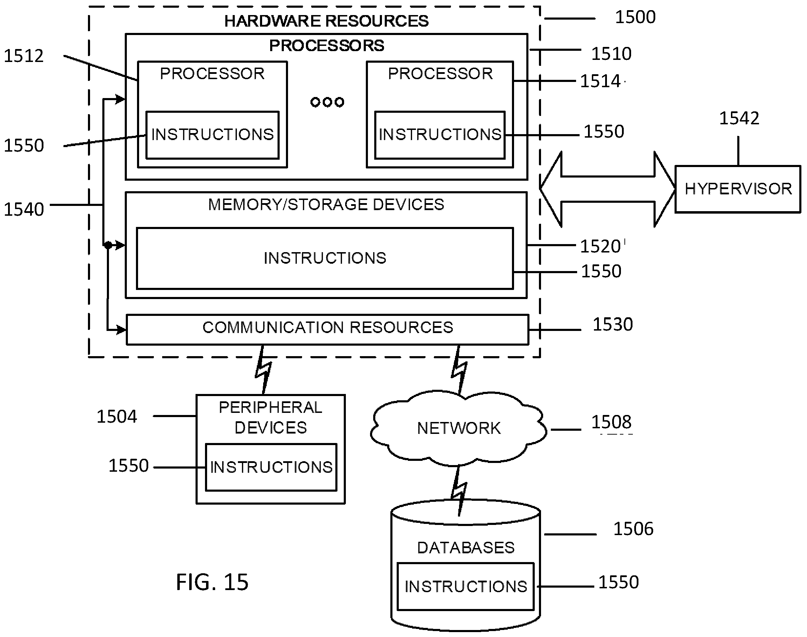

FIG. 15 is a block diagram illustrating components, according to some example embodiments, able to read instructions from a machine-readable or computer-readable medium (e.g., a non-transitory machine-readable storage medium) and perform any one or more of the methodologies discussed herein. Specifically, FIG. 15 shows a diagrammatic representation of hardware resources 1500 including one or more processors (or processor cores) 1510, one or more memory/storage devices 1520, and one or more communication resources 1530, each of which may be communicatively coupled via a bus 1540 or other interface circuitry. For embodiments where node virtualization (e.g., NFV) is utilized, a hypervisor 1502 may be executed to provide an execution environment for one or more network slices/sub-slices to utilize the hardware resources 1500.

The processors 1510 may include, for example, a processor 1512 and a processor 1514. The processors 1510 may be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), another processor (including those discussed herein), or any suitable combination thereof.

The memory/storage devices 1520 may include main memory, disk storage, or any suitable combination thereof. The memory/storage devices 1520 may include, but are not limited to, any type of volatile, non-volatile, or semi-volatile memory such as dynamic random access memory (DRAM), static random access memory (SRAM), erasable programmable read-only memory (EPROM), electrically erasable programmable read-only memory (EEPROM), Flash memory, solid-state storage, etc.

The communication resources 1530 may include interconnection or network interface controllers, components, or other suitable devices to communicate with one or more peripheral devices 1504 or one or more databases 1506 or other network elements via a network 1508. For example, the communication resources 1530 may include wired communication components (e.g., for coupling via USB, Ethernet, etc.), cellular communication components, NFC components, Bluetooth® (or Bluetooth® Low Energy) components, Wi-Fi® components, and other communication components.

Instructions 1550 may comprise software, a program, an application, an applet, an app, or other executable code for causing at least any of the processors 1510 to perform any one or more of the methodologies discussed herein. The instructions 1550 may reside, completely or partially, within at least one of the processors 1510 (e.g., within the processor's cache memory), the memory/storage devices 1520, or any suitable combination thereof. Furthermore, any portion of the instructions 1550 may be transferred to the hardware resources 1500 from any combination of the peripheral devices 1504 or the databases 1506. Accordingly, the memory of processors 1510, the memory/storage devices 1520, the peripheral devices 1504, and the databases 1506 are examples of computer-readable and machine-readable media.

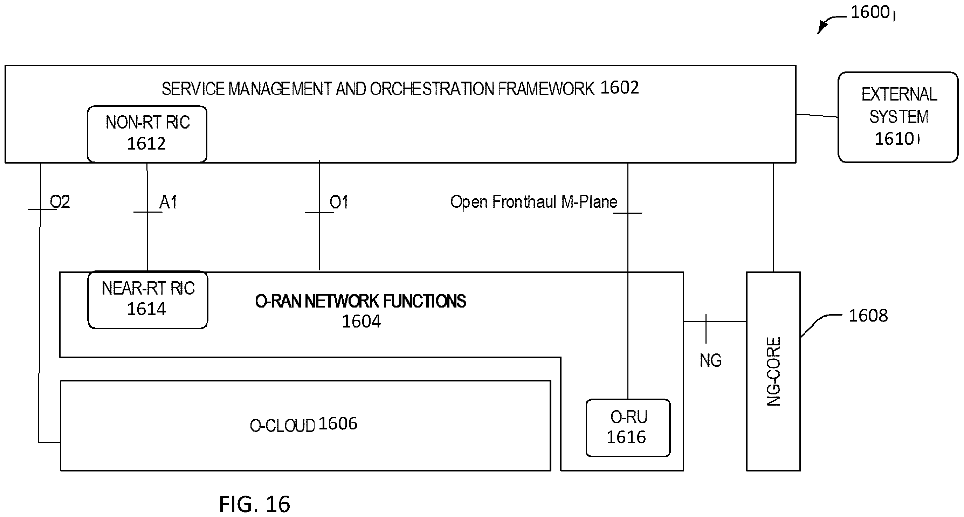

Fig. 16 provides a high-level view of an Open RAN (O-RAN) architecture 1600. The O-RAN architecture 1600 includes four O-RAN defined interfaces - namely, the A1 interface, the O1 interface, the O2 interface, and the Open Fronthaul Management (M)-plane interface - which connect the Service Management and Orchestration (SMO) framework 1602 to O-RAN network functions (NFs) 1604 and the O-Cloud 1606. The SMO 1602 (described in [O13]) also connects with an external system 1610, which provides enrichment data to the SMO 1602. Fig. 16 also illustrates that the A1 interface terminates at an O-RAN Non-Real Time (RT) RAN Intelligent Controller (RIC) 1612 in or at the SMO 1602 and at the O-RAN Near-RT RIC 1614 in or at the O-RAN NFs 1604. The O-RAN NFs 1604 can be VNFs such as VMs or containers, sitting above the O-Cloud 1606 and/or Physical Network Functions (PNFs) utilizing customized hardware. All O-RAN NFs 1604 are expected to support the O1 interface when interfacing the SMO framework 1602. The O-RAN NFs 1604 connect to the NG-Core 1608 via the NG interface (which is a 3GPP defined interface). The Open Fronthaul M-plane interface between the SMO 1602 and the O-RAN Radio Unit (O-RU) 1616 supports the O-RU 1616 management in the O-RAN hybrid model as specified in [O16]. The Open Fronthaul M-plane interface is an optional interface to the SMO 1602 that is included for backward compatibility purposes as per [O16], and is intended for management of the O-RU 1616 in hybrid mode only. The management architecture of flat mode [O12] and its relation to the O1 interface for the O-RU 1616 is for future study. The O-RU 1616 termination of the O1 interface towards the SMO 1602 as specified in [O12].

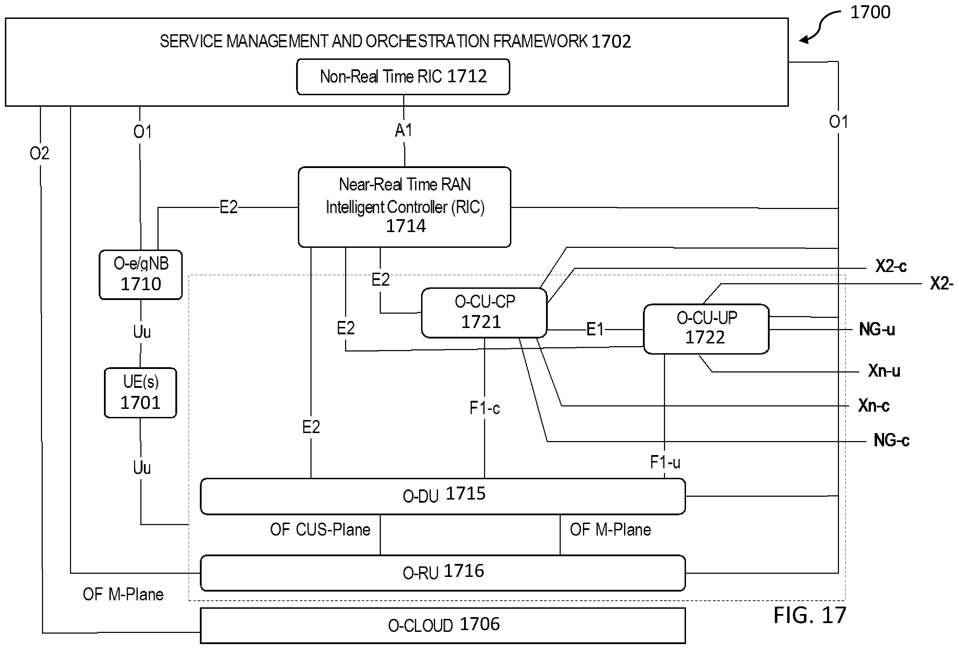

Fig. 17 shows an O-RAN logical architecture 1700 corresponding to the O-RAN architecture 1600 of Fig. 16. In Figure 17, the SMO 1702 corresponds to the SMO 1602, O-Cloud 1706 corresponds to the O-Cloud 1606, the non-RT RIC 1712 corresponds to the non-RT RIC 1612, the near-RT RIC 1714 corresponds to the near-RT RIC 1614, and the O-RU 1716 corresponds to the O-RU 1616 of Figure 17, respectively. The O-RAN logical architecture 1700 includes a radio portion and a management portion.

The management portion/side of the architectures 1700 includes the SMO Framework 1702 containing the non-RT RIC 1712, and may include the O-Cloud 1706. The O-Cloud 1706 is a cloud computing platform including a collection of physical infrastructure nodes to host the relevant O-RAN functions (e.g., the near-RT RIC 1714, O-CU-CP 1721, O-CU-UP 1722, and the O-DU 1715), supporting software components (e.g., OSs, VMMs, container runtime engines, ML engines, etc.), and appropriate management and orchestration functions.

The radio portion/side of the logical architecture 1700 includes the near-RT RIC 1714, the O-RAN Distributed Unit (O-DU) 1715, the O-RU 1716, the O-RAN Central Unit - Control Plane (O-CU-CP) 1721, and the O-RAN Central Unit - User Plane (O-CU-UP) 1722 functions. The radio portion/side of the logical architecture 1700 may also include the O-e/gNB 1710.

The O-DU 1715 is a logical node hosting RLC, MAC, and higher PHY layer entities/elements (High-PHY layers) based on a lower layer functional split. The O-RU 1716 is a logical node hosting lower PHY layer entities/elements (Low-PHY layer) (e.g., FFT/iFFT, PRACH extraction, etc.) and RF processing elements based on a lower layer functional split. Virtualization of O-RU 1716 is FFS. The O-CU-CP 1721 is a logical node hosting the RRC and the control plane (CP) part of the PDCP protocol. The O O-CU-UP 1722 is a a logical node hosting the user plane part of the PDCP protocol and the SDAP protocol.

An E2 interface terminates at a plurality of E2 nodes. The E2 nodes are logical nodes/entities that terminate the E2 interface. For NR/5G access, the E2 nodes include the O-CU-CP 1721, O-CU-UP 1722, O-DU 1715, or any combination of elements as defined in [O15]. For E-UTRA access the E2 nodes include the O-e/gNB 1710. As shown in Figure 17, the E2 interface also connects the O-e/gNB 1710 to the Near-RT RIC 1714. The protocols over E2 interface are based exclusively on Control Plane (CP) protocols. The E2 functions are grouped into the following categories: (a) near-RT RIC 1714 services (REPORT, INSERT, CONTROL and POLICY, as described in [O15]); and (b) near-RT RIC 1714 support functions, which include E2 Interface Management (E2 Setup, E2 Reset, Reporting of General Error Situations, etc.) and Near-RT RIC Service Update (e.g., capability exchange related to the list of E2 Node functions exposed over E2).

Figure 17 shows the Uu interface between a UE 1701 and O-e/gNB 1710 as well as between the UE 1701 and O-RAN components. The Uu interface is a 3GPP defined interface (see e.g., sections 5.2 and 5.3 of [O07]), which includes a complete protocol stack from L1 to L3 and terminates in the NG-RAN or E-UTRAN. The O-e/gNB 1710 is an LTE eNB [O04], a 5G gNB or ng-eNB [O06] that supports the E2 interface. The O-e/gNB 1710 may be the same or similar as eNB 1712, gNB 1716, ng-eNB 1718, RAN 1408, RAN 1510, or some other base station, RAN, or nodeB discussed previously. The a UE 1701 may correspond to UEs 1702, 1002, 1402, UE 1505, or some other UE discussed with respect to other Figures herein, and/or the like. There may be multiple UEs 1701 and/or multiple O-e/gNB 1710, each of which may be connected to one another the via respective Uu interfaces. Although not shown in Figure 17, the O-e/gNB 1710 supports O-DU 1715 and O-RU 1716 functions with an Open Fronthaul interface between them.

The Open Fronthaul (OF) interface(s) is/are between O-DU 1715 and O-RU 1716 functions [O16] [O17]. The OF interface(s) includes the Control User Synchronization (CUS) Plane and Management (M) Plane. Figures 16 and 17 also show that the O-RU 1716 terminates the OF M-Plane interface towards the O-DU 1715 and optionally towards the SMO 1702 as specified in [O16]. The O-RU 1716 terminates the OF CUS-Plane interface towards the O-DU 1715 and the SMO 1702.

The F1-c interface connects the O-CU-CP 1721 with the O-DU 1715. As defined by 3GPP, the F1-c interface is between the gNB-CU-CP and gNB-DU nodes [O07] [O10]. However, for purposes of O-RAN, the F1-c interface is adopted between the O-CU-CP 1721 with the O-DU 1715 functions while reusing the principles and protocol stack defined by 3GPP and the definition of interoperability profile specifications.

The F1-u interface connects the O-CU-UP 1722 with the O-DU 1715. As defined by 3GPP, the F1-u interface is between the gNB-CU-UP and gNB-DU nodes [O07] [O10]. However, for purposes of O-RAN, the F1-u interface is adopted between the O-CU-UP 1722 with the O-DU 1715 functions while reusing the principles and protocol stack defined by 3GPP and the definition of interoperability profile specifications.

The NG-c interface is defined by 3GPP as an interface between the gNB-CU-CP and the AMF in the 5GC [O06].

The NG-c is also referred as the N2 interface (see [O06]). The NG-u interface is defined by 3GPP, as an interface between the gNB-CU-UP and the UPF in the 5GC

[O06]. The NG-u interface is referred as the N3 interface (see [O06]). In O-RAN, NG-c and NG-u protocol stacks defined by 3GPP are reused and may be adapted for O-RAN purposes.

The X2-c interface is defined in 3GPP for transmitting control plane information between eNBs or between eNB and en-gNB in EN-DC. The X2-u interface is defined in 3GPP for transmitting user plane information between eNBs or between eNB and en-gNB in EN-DC (see e.g., [O05], [O06]). In O-RAN, X2-c and X2-u protocol stacks defined by 3GPP are reused and may be adapted for O-RAN purposes

The Xn-c interface is defined in 3GPP for transmitting control plane information between gNBs, ng-eNBs, or between an ng-eNB and gNB. The Xn-u interface is defined in 3GPP for transmitting user plane information between gNBs, ng-eNBs, or between ng-eNB and gNB (see e.g., [O06], [O08]). In O-RAN, Xn-c and Xn-u protocol stacks defined by 3GPP are reused and may be adapted for O-RAN purposes

The E1 interface is defined by 3GPP as being an interface between the gNB-CU-CP (e.g., gNB-CU-CP 3728) and gNB-CU-UP (see e.g., [O07], [O09]). In O-RAN, E1 protocol stacks defined by 3GPP are reused and adapted as being an interface between the O-CU-CP 1721 and the O-CU-UP 1722 functions.

The O-RAN Non-Real Time (RT) RAN Intelligent Controller (RIC) 1712 is a logical function within the SMO framework 1602, 1702 that enables non-real-time control and optimization of RAN elements and resources; AI/machine learning (ML) workflow(s) including model training, inferences, and updates; and policy-based guidance of applications/-features in the Near-RT RIC 1714.

The O-RAN near-RT RIC 1714 is a logical function that enables near-real-time control and optimization of RAN elements and resources via fine-grained data collection and actions over the E2 interface. The near-RT RIC 1714 may include one or more AI/ML workflows including model training, inferences, and updates.

The non-RT RIC 1712 can be an ML training host to host the training of one or more ML models. ML training can be performed offline using data collected from the RIC, O-DU 1715 and O-RU 1716. For supervised learning, non-RT RIC 1712 is part of the SMO 1702, and the ML training host and/or ML model host/actor can be part of the non-RT RIC 1712 and/or the near-RT RIC 1714. For unsupervised learning, the ML training host and ML model host/actor can be part of the non-RT RIC 1712 and/or the near-RT RIC 1714. For reinforcement learning, the ML training host and ML model host/actor may be co-located as part of the non-RT RIC 1712 and/or the near-RT RIC 1714. In some implementations, the non-RT RIC 1712 may request or trigger ML model training in the training hosts regardless of where the model is deployed and executed. ML models may be trained and not currently deployed.

In some implementations, the non-RT RIC 1712 provides a query-able catalog for an ML designer/developer to publish/install trained ML models (e.g., executable software components). In these implementations, the non-RT RIC 1712 may provide discovery mechanism if a particular ML model can be executed in a target ML inference host (MF), and what number and type of ML models can be executed in the MF. For example, there may be three types of ML catalogs made disoverable by the non-RT RIC 1712: a design-time catalog (e.g., residing outside the non-RT RIC 1712 and hosted by some other ML platform(s)), a training/deployment-time catalog (e.g., residing inside the non-RT RIC 1712), and a run-time catalog (e.g., residing inside the non-RT RIC 1712). The non-RT RIC 1712 supports necessary capabilities for ML model inference in support of ML assisted solutions running in the non-RT RIC 1712 or some other ML inference host. These capabilities enable executable software to be installed such as VMs, containers, etc. The non-RT RIC 1712 may also include and/or operate one or more ML engines, which are packaged software executable libraries that provide methods, routines, data types, etc., used to run ML models. The non-RT RIC 1712 may also implement policies to switch and activate ML model instances under different operating conditions.

The non-RT RIC 172 is be able to access feedback data (e.g., FM and PM statistics) over the O1 interface on ML model performance and perform necessary evaluations. If the ML model fails during runtime, an alarm can be generated as feedback to the non-RT RIC 1712. How well the ML model is performing in terms of prediction accuracy or other operating statistics it produces can also be sent to the non-RT RIC 1712 over O1. The non-RT RIC 1712 can also scale ML model instances running in a target MF over the O1 interface by observing resource utilization in MF. The environment where the ML model instance is running (e.g., the MF) monitors resource utilization of the running ML model. This can be done, for example, using an ORAN-SC component called ResourceMonitor in the near-RT RIC 1714 and/or in the non-RT RIC 1712, which continuously monitors resource utilization. If resources are low or fall below a certain threshold, the runtime environment in the near-RT RIC 1714 and/or the non-RT RIC 1712 provides a scaling mechanism to add more ML instances. The scaling mechanism may include a scaling factor such as an number, percentage, and/or other like data used to scale up/down the number of ML instances. ML model instances running in the target ML inference hosts may be automatically scaled by observing resource utilization in the MF. For example, the Kubernetes® (K8s) runtime environment typically provides an auto-scaling feature.

The A1 interface is between the non-RT RIC 1712 (within or outside the SMO 1702) and the near-RT RIC 1714. The A1 interface supports three types of services as defined in [O14], including a Policy Management Service, an Enrichment Information Service, and ML Model Management Service. A1 policies have the following characteristics compared to persistent configuration [O14]: A1 policies are not critical to traffic; A1 policies have temporary validity; A1 policies may handle individual UE or dynamically defined groups of UEs; A1 policies act within and take precedence over the configuration; and A1 policies are non-persistent, i.e., do not survive a restart of the near-RT RIC.

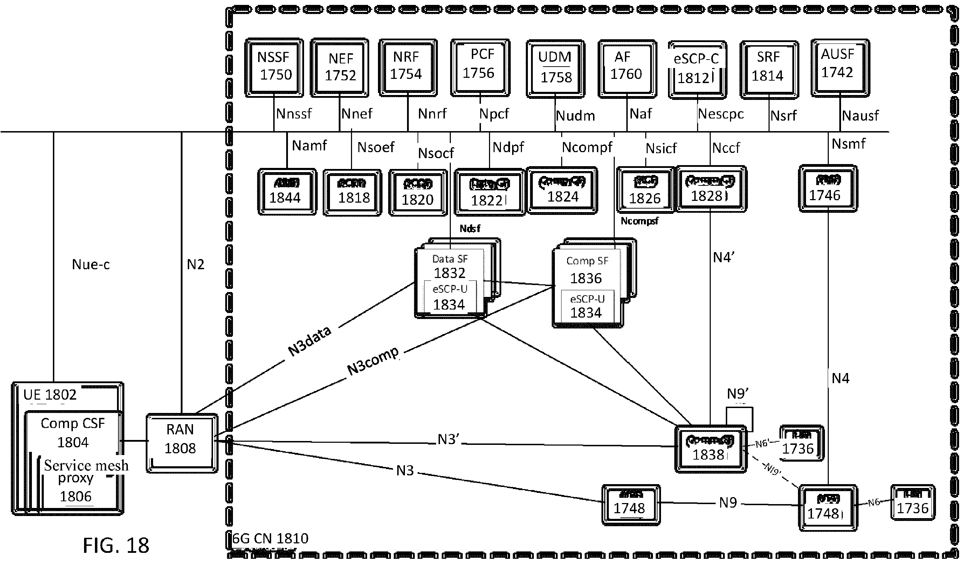

Fig. 18 illustrates a network 1800 in accordance with various embodiments. The network 1800 may operate in a matter consistent with 3GPP technical specifications or technical reports for 6G systems. In some embodiments, the network 1800 may operate concurrently with network 1700. For example, in some embodiments, the network 1800 may share one or more frequency or bandwidth resources with network 1700. As one specific example, a UE (e.g., UE 1802) may be configured to operate in both network 1800 and network 1700. Such configuration may be based on a UE including circuitry configured for communication with frequency and bandwidth resources of both networks 1700 and 1800. In general, several elements of network 1800 may share one or more characteristics with elements of network 1700. For the sake of brevity and clarity, such elements may not be repeated in the description of network 1800.

The network 1800 may include a UE 1802, which may include any mobile or non-mobile computing device designed to communicate with a RAN 1808 via an over-the-air connection. The UE 1802 may be similar to, for example, UE 1702. The UE 1802 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

Although not specifically shown in Figure 18, in some embodiments the network 1800 may include a plurality of UEs coupled directly with one another via a sidelink interface. The UEs may be M2M/D2D devices that communicate using physical sidelink channels such as, but not limited to, PSBCH, PSDCH, PSSCH, PSCCH, PSFCH, etc. Similarly, although not specifically shown in Figure 18, the UE 1802 may be communicatively coupled with an AP such as AP 1706 as described with respect to Fig. 13. Additionally, although not specifically shown in Figure 18, in some embodiments the RAN 1808 may include one or more ANss such as AN 1708 as described with respect to Fig. 13. The RAN 1808 and/or the AN of the RAN 1808 may be referred to as a base station (BS), a RAN node, or using some other term or name.

The UE 1802 and the RAN 1808 may be configured to communicate via an air interface that may be referred to as a sixth generation (6G) air interface. The 6G air interface may include one or more features such as communication in a terahertz (THz) or sub-THz bandwidth, or joint communication and sensing. As used herein, the term "joint communication and sensing" may refer to a system that allows for wireless communication as well as radar-based sensing via various types of multiplexing. As used herein, THz or sub-THz bandwidths may refer to communication in the 80 GHz and above frequency ranges. Such frequency ranges may additionally or alternatively be referred to as "millimeter wave" or "mmWave" frequency ranges.

The RAN 1808 may allow for communication between the UE 1802 and a 6G core network (CN) 1810. Specifically, the RAN 1808 may facilitate the transmission and reception of data between the UE 1802 and the 6G CN 1810. The 6G CN 1810 may include various functions such as NSSF 1750, NEF 1752, NRF 1754, PCF 1756, UDM 1758, AF 1760, SMF 1746, and AUSF 1742. The 6G CN 1810 may additional include UPF 1748 and DN 1736 as shown in Figure 18.

Additionally, the RAN 1808 may include various additional functions that are in addition to, or alternative to, functions of a legacy cellular network such as a 4G or 5G network. Two such functions may include a Compute Control Function (Comp CF) 1824 and a Compute Service Function (Comp SF) 1836. The Comp CF 1824 and the Comp SF 1836 may be parts or functions of the Computing Service Plane. Comp CF 1824 may be a control plane function that provides functionalities such as management of the Comp SF 1836, computing task context generation and management (e.g., create, read, modify, delete), interaction with the underlying computing infrastructure for computing resource management, etc.. Comp SF 1836 may be a user plane function that serves as the gateway to interface computing service users (such as UE 1802) and computing nodes behind a Comp SF instance. Some functionalities of the Comp SF 1836 may include: parse computing service data received from users to compute tasks executable by computing nodes; hold service mesh ingress gateway or service API gateway; service and charging policies enforcement; performance monitoring and telemetry collection, etc. In some embodiments, a Comp SF 1836 instance may serve as the user plane gateway for a cluster of computing nodes. A Comp CF 1824 instance may control one or more Comp SF 1836 instances.

Two other such functions may include a Communication Control Function (Comm CF) 1828 and a Communication Service Function (Comm SF) 1838, which may be parts of the Communication Service Plane. The Comm CF 1828 may be the control plane function for managing the Comm SF 1838, communication sessions creation/configuration/releasing, and managing communication session context. The Comm SF 1838 may be a user plane function for data transport. Comm CF 1828 and Comm SF 1838 may be considered as upgrades of SMF 1746 and UPF 1748, which were described with respect to a 5G system in Fig. 13. The upgrades provided by the Comm CF 1828 and the Comm SF 1838 may enable service-aware transport. For legacy (e.g., 4G or 5G) data transport, SMF 1746 and UPF 1748 may still be used.

Two other such functions may include a Data Control Function (Data CF) 1822 and Data Service Function (Data SF) 1832 may be parts of the Data Service Plane. Data CF 1822 may be a control plane function and provides functionalities such as Data SF 1832 management, Data service creation/configuration/releasing, Data service context management, etc. Data SF 1832 may be a user plane function and serve as the gateway between data service users (such as UE 1802 and the various functions of the 6G CN 1810) and data service endpoints behind the gateway. Specific functionalities may include include: parse data service user data and forward to corresponding data service endpoints, generate charging data, report data service status.

Another such function may be the Service Orchestration and Chaining Function (SOCF) 1820, which may discover, orchestrate and chain up communication/computing/data services provided by functions in the network. Upon receiving service requests from users, SOCF 1820 may interact with one or more of Comp CF 1824, Comm CF 1828, and Data CF 1822 to identify Comp SF 1836, Comm SF 1838, and Data SF 1832 instances, configure service resources, and generate the service chain, which could contain multiple Comp SF 1836, Comm SF 1838, and Data SF 1832 instances and their associated computing endpoints. Workload processing and data movement may then be conducted within the generated service chain. The SOCF 1820 may also responsible for maintaining, updating, and releasing a created service chain.

Another such function may be the service registration function (SRF) 1814, which may act as a registry for system services provided in the user plane such as services provided by service endpoints behind Comp SF 1836 and Data SF 1832 gateways and services provided by the UE 1802. The SRF 1814 may be considered a counterpart of NRF 1754, which may act as the registry for network functions.

Other such functions may include an evolved service communication proxy (eSCP) and service infrastructure control function (SICF) 1826, which may provide service communication infrastructure for control plane services and user plane services. The eSCP may be related to the service communication proxy (SCP) of 5G with user plane service communication proxy capabilities being added. The eSCP is therefore expressed in two parts: eCSP-C 1812 and eSCP-U 1834, for control plane service communication proxy and user plane service communication proxy, respectively. The SICF 1826 may control and configure eCSP instances in terms of service traffic routing policies, access rules, load balancing configurations, performance monitoring, etc.

Another such function is the AMF 1844. The AMF 1844 may be similar to 1744, but with additional functionality. Specifically, the AMF 1844 may include potential functional repartition, such as move the message forwarding functionality from the AMF 1844 to the RAN 1808.

Another such function is the service orchestration exposure function (SOEF) 1818. The SOEF may be configured to expose service orchestration and chaining services to external users such as applications.

The UE 1802 may include an additional function that is referred to as a computing client service function (comp CSF) 1804. The comp CSF 1804 may have both the control plane functionalities and user plane functionalities, and may interact with corresponding network side functions such as SOCF 1820, Comp CF 1824, Comp SF 1836, Data CF 1822, and/or Data SF 1832 for service discovery, request/response, compute task workload exchange, etc. The Comp CSF 1804 may also work with network side functions to decide on whether a computing task should be run on the UE 1802, the RAN 1808, and/or an element of the 6G CN 1810.

The UE 1802 and/or the Comp CSF 1804 may include a service mesh proxy 1806. The service mesh proxy 1806 may act as a proxy for service-to-service communication in the user plane. Capabilities of the service mesh proxy 1806 may include one or more of addressing, security, load balancing, etc.

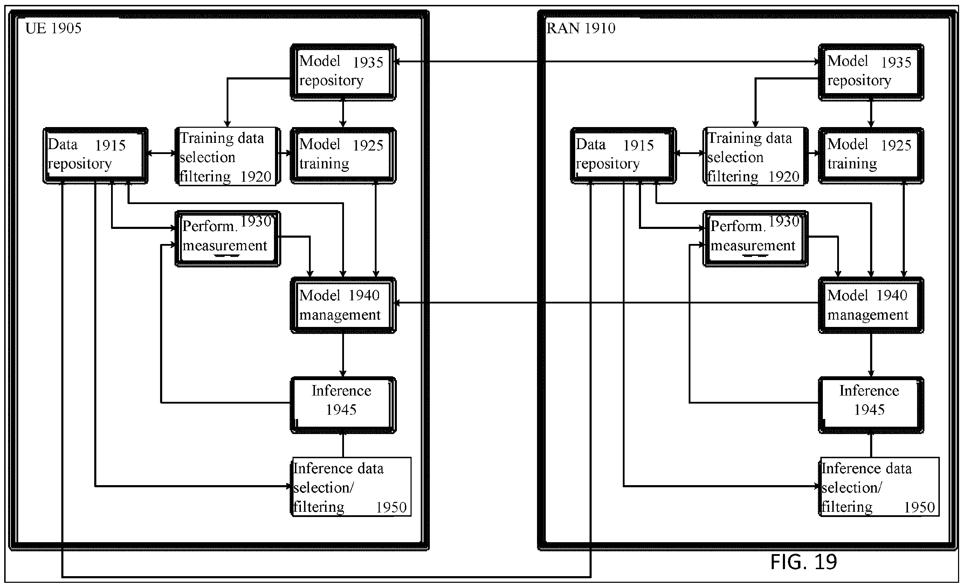

Fig. 19 illustrates a simplified block diagram of artificial (AI)-assisted communication between a UE 1905 and a RAN 1910, in accordance with various embodiments. More specifically, as described in further detail below, AI/machine learning (ML) models may be used or leveraged to facilitate over-the-air communication between UE 1905 and RAN 1910.

One or both of the UE 1905 and the RAN 1910 may operate in a matter consistent with 3GPP technical specifications or technical reports for 6G systems. In some embodiments, the wireless cellular communication between the UE 1905 and the RAN 1910 may be part of, or operate concurrently with, networks 1800, 1700, and/or some other network described herein.

The UE 1905 may be similar to, and share one or more features with, UE 1802, UE 1702, and/or some other UE described herein. The UE 1905 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc. The RAN 1910 may be similar to, and share one or more features with, RAN 1714, RAN 1808, and/or some other RAN described herein.

As may be seen in Figure 19, the AI-related elements of UE 1905 may be similar to the AI-related elements of RAN 1910. For the sake of discussion herein, description of the various elements will be provided from the point of view of the UE 1905, however it will be understood that such discussion or description will apply to equally named/numbered elements of RAN 1910, unless explicitly stated otherwise.

As previously noted, the UE 1905 may include various elements or functions that are related to ALWLHL. Such elements may be implemented as hardware, software, firmware, and/or some combination thereof. In embodiments, one or more of the elements may be implemented as part of the same hardware (e.g., chip or multi-processor chip), software (e.g., a computing program), or firmware as another element.

One such element may be a data repository 1915. The data repository 1915 may be responsible for data collection and storage. Specifically, the data repository 1915 may collect and store RAN configuration parameters, measurement data, performance key performance indicators (KPIs), model performance metrics, etc., for model training, update, and inference. More generally, collected data is stored into the repository. Stored data can be discovered and extracted by other elements from the data repository 1915. For example, as may be seen, the inference data selection/filter element 1950 may retrieve data from the data repository 1915. In various embodiments, the UE 1905 may be configured to discover and request data from the data repository 1910 in the RAN, and vice versa. More generally, the data repository 1915 of the UE 1905 may be communicatively coupled with the data repository 1915 of the RAN 1910 such that the respective data repositories of the UE and the RAN may share collected data with one another.

Another such element may be a training data selection/filtering functional block 1920. The training data selection/filter functional block 1920 may be configured to generate training, validation, and testing datasets for model training. Training data may be extracted from the data repository 1915. Data may be selected/filtered based on the specific AI/MI, model to be trained. Data may optionally be transformed/augmented/pre-processed (e.g., normalized) before being loaded into datasets. The training data selection/filter functional block 1920 may label data in datasets for supervised learning. The produced datasets may then be fed into model training the model training functional block 1925.

As noted above, another such element may be the model training functional block 1925. This functional block may be responsible for training and updating(re-training) AI/ML models. The selected model may be trained using the fed-in datasets (including training, validation, testing) from the training data selection/filtering functional block. The model training functional block 1925 may produce trained and tested AI/ML models which are ready for deployment. The produced trained and tested models can be stored in a model repository 1935.

The model repository 1935 may be responsible for AI/MI, models' (both trained and un-trained) storage and exposure. Trained/updated model(s) may be stored into the model repository 1935. Model and model parameters may be discovered and requested by other functional blocks (e.g., the training data selection/filter functional block 1920 and/or the model training functional block 1925). In some embodiments, the UE 1905 may discover and request AI/ML models from the model repository 1935 of the RAN 1910. Similarly, the RAN 1910 may be able to discover and/or request AI/ML models from the model repository 1935 of the UE 1905. In some embodiments, the RAN 1910 may configure models and/or model parameters in the model repository 1935 of the UE 1905.

Another such element may be a model management functional block 1940. The model management functional block 1940 may be responsible for management of the AI/MI, model produced by the model training functional block 1925. Such management functions may include deployment of a trained model, monitoring model performance, etc. In model deployment, the model management functional block 1940 may allocate and schedule hardware and/or software resources for inference, based on received trained and tested models. As used herein, "inference" refers to the process of using trained AI/ML model(s) to generate data analytics, actions, policies, etc. based on input inference data. In performance monitoring, based on wireless performance KPIs and model performance metrics, the model management functional block 1940 may decide to terminate the running model, start model re-training, select another model, etc. In embodiments, the model management functional block 1940 of the RAN 1910 may be able to configure model management policies in the UE 1905 as shown.

Another such element may be an inference data selection/filtering functional block 1950. The inference data selection/filter functional block 1950 may be responsible for generating datasets for model inference at the inference functional block 1945, as described below. Specifically, inference data may be extracted from the data repository 1915. The inference data selection/filter functional block 1950 may select and/or filter the data based on the deployed AI/ML model. Data may be transformed/augmented/pre-processed following the same transformation/augmentation/pre-processing as those in training data selection/filtering as described with respect to functional block 1920. The produced inference dataset may be fed into the inference functional block 1945.

Another such element may be the inference functional block 1945. The inference functional block 1945 may be responsible for executing inference as described above. Specifically, the inference functional block 1945 may consume the inference dataset provided by the inference data selection/filtering functional block 1950, and generate one or more outcomes. Such outcomes may be or include data analytics, actions, policies, etc. The outcome(s) may be provided to the performance measurement functional block 1930.

The performance measurement functional block 1930 may be configured to measure model performance metrics (e.g., accuracy, model bias, run-time latency, etc.) of deployed and executing models based on the inference outcome(s) for monitoring purpose. Model performance data may be stored in the data repository 1915.

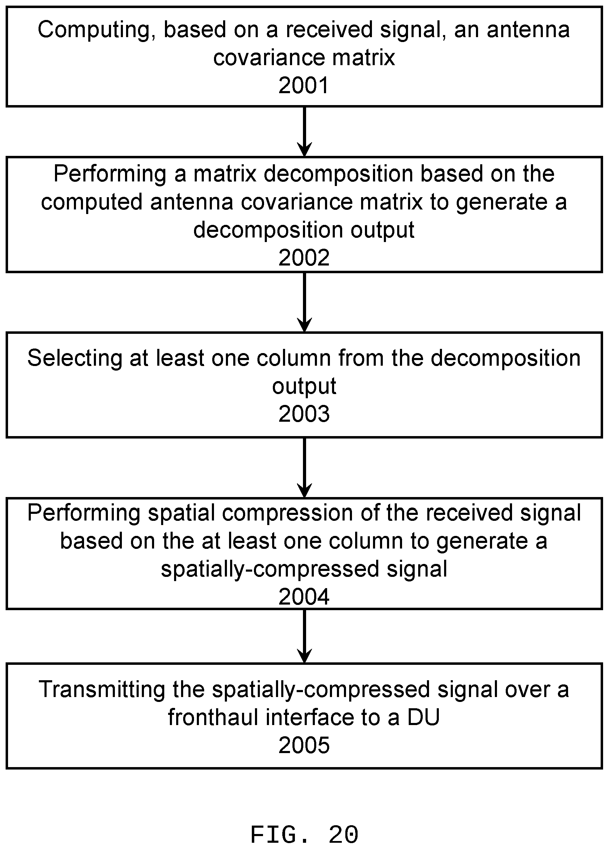

In some embodiments, the electronic device(s), network(s), system(s), chip(s) or component(s), or portions or implementations thereof, of Figs. 13-19, or some other figure herein, may be configured to perform one or more processes, techniques, or methods as described herein, or portions thereof. One such process is depicted in Fig. 20. The process of Fig. 20 may include or relate to a method to be performed by a radio unit (RU), one or more elements of a RU, and/or one or more electronic devices that include and/or implement a RU. The process may include computing, at 2001 based on a received signal, an antenna covariance matrix; performing, at 2002, a matrix decomposition based on the computed antenna covariance matrix to generate a decomposition output; selecting, at 2003, at least one column from the decomposition output; performing, at 2004, spatial compression of the received signal based on the at least one column to generate a spatially-compressed signal; and transmitting, at 2005, the spatially-compressed signal over a fronthaul interface to a distributed unit (DU).

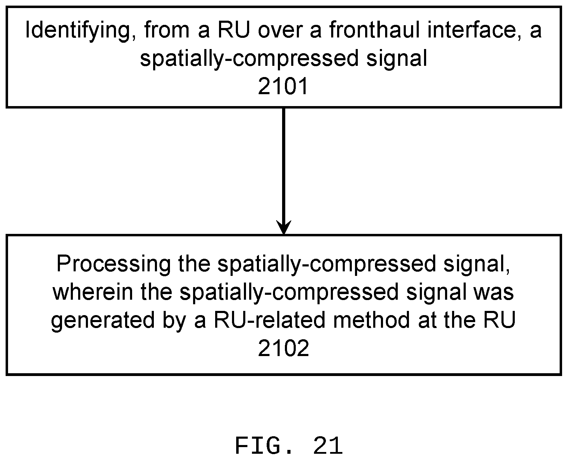

Another such process is depicted in Fig. 21. The process of Fig. 21 may include or relate to a method to be performed by a distributed unit (DU), one or more elements of a DU, and/or one or more electronic devices that include and/or implement a DU. The process may include identifying, at 2101 from a radio unit (RU) over a fronthaul interface, a spatially-compressed signal; and processing, at 2102, the spatially-compressed signal, wherein the spatially-compressed signal was generated by a RU-related method at the RU, wherein the RU-related method comprises: computing, based on a received signal, an antenna covariance matrix; performing a matrix decomposition based on the computed antenna covariance matrix to generate a decomposition output; selecting at least one column from the decomposition output; performing spatial compression of the received signal based on the at least one column to generate the spatially-compressed signal; and transmitting the spatially-compressed signal over the fronthaul interface to the DU.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

## EXAMPLES

Example 1 may include the method of spatial compression in a Radio Unit, comprising the steps of:

- Computing an antenna covariance matrix from a received signal over multiple resource elements
- Performing a matrix decomposition based on the computed covariance matrix
- Selecting a number of columns from the decomposition output
- Performing spatial compression of the received signal based on the selected columns
- Transmission of spatially-compressed signal over fronthaul interface to Distributed Unit

Example 1a may include the method according to example 1 or some other example herein, where the steps of claim 1 are performed for multiple groups of resource elements (symbols on time and/or subcarriers in frequency)

Example 2 may include the method according to example 1 or some other example herein, where the decomposition is based on a subset of columns of the covariance matrix

Example 3 may include the method according to examples 1 or 2 or some other example herein, where the decomposition is a QR decomposition

Example 4 may include the method according to examples 1,2 or 3 or some other example herein, where the decomposition is a QR decomposition with sorting

Example 5 may include the method according to examples 1 or 2 or some other example herein, where the decomposition is a Singular Value or Eigen decomposition

Example 6 may include the method according to examples 1 to 5 or some other example herein, where the number of selected columns equals the number of spatial streams after spatial compression

Example 7 may include the method according to examples 1 to 6 or some other example herein, where the number of spatial streams after spatial compression is a fixed value

Example 8 may include the method according to examples 1 to 6 or some other example herein, where the number of spatial streams after spatial compression is controlled by the Distributed Unit by means of a control message or indication

Example 9 may include the method according to examples 1 to 8 or some other example herein, wherein applied to Physical Uplink Shared Channel and associated DMRS

Example 10 may include the method according to example 9 or some other example herein, where the covariance estimation, decomposition or spatial compression is performed per Physical Uplink Shared Channel allocation

Example 11 may include the method according to examples 9 or 10 or some other example herein, where the covariance estimation is performed over a number of OFDM symbols implied by the size of the allocation

Example 12 may include the method according to examples 9 or 10 or some other example herein, where the covariance estimation is performed over a number of OFDM symbols under the control of the Distributed Unit by means of a control message or indication

Example 13 may include the method according to examples 9 or 10 or some other example herein, where the covariance estimation is performed over a number of OFDM subcarriers implied by the size of the allocation

Example 14 may include the method according to examples 9 or 10 or some other example herein where the covariance estimation is performed over a number of OFDM subcarriers under the control of the Distributed Unit by means of a control message or indication

Example 15 may include the method according to examples 1 to 8 or some other example herein, wherein applied to Sounding Reference Signal

Example 16 may include the method according to examples 15 or some other example herein, where the covariance estimation, decomposition or spatial compression is performed per Sounding Reference Signal allocation

Example 17 may include the method according to examples 15 or 16 or some other example herein, where the covariance estimation is performed over a number of OFDM symbols implied by the size of the allocation

Example 18 may include the method according to examples 15 or 16 or some other example herein, where the covariance estimation, decomposition or spatial compression is performed per Sounding Reference Signal comb.

Example 19 may include the method according to any previous examples where the compression matrix is passed over fronthaul interface from RU to DU.

Example 20 may include the method according to example 19 or some other example herein, where decompression is performed in the DU based on the compression matrix passed over fronthaul interface from RU to DU.

Example 21 may include the method according to example 20 or some other example herein, where decompression is performed on the spatially-compressed signal.

Example 22 may include the method according to example 20 or some other example herein, where decompression is performed on channel estimates derived from the spatially-compressed signal.

Example 23 may include the method according to example 20 or some other example herein, where decompression is performed on beamforming weights derived from the spatially-compressed signal.

Example 24 may include the method according to any previous example where the compression or decompression is performed by a general not necessarily linear function.

Example 25 may include the method according to example 23 or some other example herein, where the compression or decompression function is learned from measured data using a machine learning framework.

Example 26 may include a method to be performed by a radio unit (RU), one or more elements of a RU, and/or one or more electronic devices that include and/or implement a RU, wherein the method comprises: computing, based on a received signal, an antenna covariance matrix; performing a matrix decomposition based on the computed antenna covariance matrix to generate a decomposition output; selecting at least one column from the decomposition output; performing spatial compression of the received signal based on the at least one column to generate a spatially-compressed signal; and transmitting the spatially-compressed signal over a fronthaul interface to a distributed unit (DU).

Example 27 may include the method of example 26, and/or some other example herein, wherein the received signal is related to a physical uplink shared channel (PUSCH) signal.

Example 28 may include the method of any of examples 26-27, and/or some other example herein, wherein the received signal is related to a demodulation reference signal (DMRS).

Example 29 may include the method of any of examples 26-27, and/or some other example herein, wherein the received signal is related to a sounding reference signal (SRS).

Example 30 may include the method of any of examples 26-29, and/or some other example herein, wherein the method further comprises: identifying a plurality of resource allocations related to the received signal; and performing the covariance estimation, decomposition, and/or spatial compression per resource allocation of the plurality of resource allocations.

Example 31 may include the method of any of examples 26-30, and/or some other example herein, wherein the matrix decomposition is a QR decomposition.

Example 32 may include the method of any of examples 26-30, and/or some other example herein, wherein the matrix decomposition is a single value (SV) or eigen decomposition.

Example 33 may include the method of any of examples 26-32, and/or some other example herein, wherein the at least one column is a plurality of columns.

Example 34 may include the method of any of examples 26-33, and/or some other example herein, wherein the method further comprising computing the antenna covariance matrix over a plurality of resource elements (REs).

Example 35 may include a method to be performed by a distributed unit (DU), one or more elements of a DU, and/or one or more electronic devices that include and/or implement a DU, wherein the method comprises: identifying, from a radio unit (RU) over a fronthaul interface, a spatially-compressed signal; and processing the spatially-compressed signal, wherein the spatially-compressed signal was generated by a RU-related method at the RU, wherein the RU-related method comprises: computing, based on a received signal, an antenna covariance matrix; performing a matrix decomposition based on the computed antenna covariance matrix to generate a decomposition output; selecting at least one column from the decomposition output; performing spatial compression of the received signal based on the at least one column to generate the spatially-compressed signal; and transmitting the spatially-compressed signal over the fronthaul interface to the DU.

Example 36 includes the method of example 35, and/or some other example herein, wherein the received signal is related to a physical uplink shared channel (PUSCH) signal.

Example 37 includes the method of any of examples 35-36, and/or some other example herein, wherein the received signal is related to a demodulation reference signal (DMRS).

Example 38 includes the method of any of examples 35-36, and/or some other example herein, wherein the received signal is related to a sounding reference signal (SRS).

Example 39 includes the method of any of examples 35-38, and/or some other example herein, wherein the RU-related method further comprises: identifying a plurality of resource allocations related to the received signal; and performing the covariance estimation, decomposition, and/or spatial compression per resource allocation of the plurality of resource allocations.

Example 40 includes the method of any of examples 35-39, and/or some other example herein, wherein the matrix decomposition is a QR decomposition.

Example 41 includes the method of any of examples 35-40, and/or some other example herein, wherein the matrix decomposition is a single value (SV) or eigen decomposition.

Example 42 includes the method of any of example 35-41, and/or some other example herein, wherein the at least one column is a plurality of columns.

Example 43 includes the method of any of examples 35-42, and/or some other example herein, wherein the RU-related method further comprises computing the antenna covariance matrix over a plurality of resource elements (REs).

Example 44 may include the method of any of claims 26-43, and/or some other example herein, wherein the method further comprises:

identifying a plurality of groups interleaved resource elements (REs) of the spatially-compressed signal; and compressing respective ones of the groups of interleaved REs.

Example 45 may include the method of example 44, wherein respective ones of the groups of interleaved REs are compressed independently from one another.

Example 46 may include the method of any of examples 44-45, and/or some other example herein wherein the DU is to indicate to the RU a number of streams to compress to.

Example 47 may include the method of any of examples 44-46, and/or some other example herein, wherein the DU is to indicate to the RU a covariance matrix that is to be estimated over.

Example 48 may include a method of spatial compression performed in a wireless communication device using Radio Unit for Multiple-Input and Multiple Output (MIMO), the spatial compression is determined from a number of antennas to a number of streams in one or more stages, the method including:

computing an antenna covariance matrix from a received signal over multiple resource elements; performing matrix decomposition based on the computed covariance matrix to produce one or more compression vector; and generating a spatially-compressed signal by performing spatial compression on the matrix decomposition.

Example 49 may include the method of Example 48, wherein generating the spatial compression comprises performing at least one stage of spatial compression by determining a spatial compression matrix comprising:

initializing the spatial compression matrix as an empty matrix; performing for a number of iterations:

obtaining a new respective compression vector from the matrix decomposition of the computed covariance matrix, and appending the compression vector to the spatial compression matrix.

Example 50 may include the method of Example 49, wherein performing the at least one stage comprises performing a first in-order stage of the spatial compression, wherein for the first in-order stage of the spatial compression, the computed covariance matrix is computed over multiple resource elements.

Example 50a may include the method of Example 50, further including sending or transmitting a compression matrix formed by the first in-order stage of the spatial compression to a distributed unit, e.g., transmitting through a fronthaul interface of a RU.

Example 50b may include the method of Example 50 or 50a, further including receiving from the distributed unit (e.g., over fronthaul interface) an indication of a number of streams for first -in order stage of spatial compression, wherein performing the first in-order stage of the spatial compression comprises performing the first in-order stage of the spatial compression based on the number of streamed indicated by the distributed unit.

Example 51 may include the method of Example 50, 50a, 50b or some other example wherein performing at least one stage comprises performing a second in-order stage of the spatial compression, wherein for the second-in order stage of the spatial compression, the computed covariance matrix is computed over is computed over a subsets of resource elements comprising symbols on time and/or subcarriers in frequency subcarriers.

Example 51a may include the method of Example 51, further including sending or transmitting a compression matrix formed by the second in-order stage of the spatial compression to a distributed unit, e.g., transmitting 1hrough a fronthaul interface of a RU.

Example 501 may include the method of Example 51 or 501, further including receiving from the distributed unit (e.g., over fronthaul interface) an indication of a number of streams for second-in order stage of spatial compression, wherein performing the second in-order stage of the spatial compression comprises performing the second in-order stage of the spatial compression based on the number of streamed indicated by the distributed unit.

Example 52 may include the method of Example 51, 51a, 51, or some other example, wherein performing at least one stage comprises performing a third in-order stage of the spatial compression.

Example 52a may include the method of Example 52, further including sending or transmitting a compression matrix formed by the third in-order stage of the spatial compression to a distributed unit, e.g., transmitting through a fronthaul interface of a RU.

Example 53 may include the method of any of Examples 49 to 52/52a or some other Example, wherein the number of iterations is equal to a total number of streams.

Example 54 may include the method of Example 49 to 52/52a or some other Example, wherein the number of iterations is less than a maximum number of streams per user.

Example 55 may include the method of Example 54 or some other Example, wherein the number of iterations is based on an effective channel power of per user relative to a first predefined threshold.

Example 56 may include the method of claim 54 or some other example, wherein the number of iterations is based on a total captured energy of each user relative to a second predefined threshold.

Example 57 may include the method of any of Examples 48 to 56 or some other example herein, wherein performing the matrix decomposition based on the computed covariance matrix to produce one or more compression vectors comprises performing a QR decomposition of the covariance matrix.

Example 58 may include the method of any of Examples 48 to 56 or some other example herein, wherein performing the matrix decomposition based on the computed covariance matrix to produce one or more compression vectors comprises applying a Gram-Schmidt method or technique.

Example 59 may include the method of any of Example 48 to 56 or some other example herein, wherein performing the matrix decomposition based on the computed covariance matrix to produce one or more compression vectors comprises using column sorting.

Example 60 may include the method of any of Examples 48 to 56 or some other method, wherein performing the matrix decomposition based on the computed covariance matrix to produce one or more compression vectors comprises using a Householder transformation.

Example 61 may include the method of any of Examples 48 to 56, wherein performing the matrix decomposition based on the computed covariance matrix to produce one or more compression vectors comprises using one or more iterations of a power method of power technique (described herein).

Example 62 may include the method of any of Examples 48 to 61 or some other example, further including: transmitting the spatially-compressed signal over a fronthaul interface to a Distributed Unit.

Example 61 may include the method of any of Examples 48 to 60 or some other example, wherein the method is performed by a radio unit, RU.

Example Z01 may include an apparatus comprising means to perform one or more elements of a method described in or related to any of examples 1-47, or any other method or process described herein.

Example Z02 may include one or more non-transitory computer-readable media comprising instructions to cause an electronic device, upon execution of the instructions by one or more processors of the electronic device, to perform one or more elements of a method described in or related to any of examples 1-61, or any other method or process described herein.

Example Z03 may include an apparatus comprising logic, modules, or circuitry to perform one or more elements of a method described in or related to any of examples 1-47, or any other method or process described herein.

Example Z04 may include a method, technique, or process as described in or related to any of examples 1-47, or portions or parts thereof.

Example Z05 may include an apparatus comprising: one or more processors and one or more computer-readable media comprising instructions that, when executed by the one or more processors, cause the one or more processors to perform the method, techniques, or process as described in or related to any of examples 1-47, or portions thereof.

Example Z06 may include a signal as described in or related to any of examples 1-47, or portions or parts thereof.

Example Z07 may include a datagram, packet, frame, segment, protocol data unit (PDU), or message as described in or related to any of examples 1-47, or portions or parts thereof, or otherwise described in the present disclosure.

Example Z08 may include a signal encoded with data as described in or related to any of examples 1-47, or portions or parts thereof, or otherwise described in the present disclosure.

Example Z09 may include a signal encoded with a datagram, packet, frame, segment, protocol data unit (PDU), or message as described in or related to any of examples 1-47, or portions or parts thereof, or otherwise described in the present disclosure.

Example Z10 may include an electromagnetic signal carrying computer-readable instructions, wherein execution of the computer-readable instructions by one or more processors is to cause the one or more processors to perform the method, techniques, or process as described in or related to any of examples 1-47, or portions thereof.

Example Z11 may include a computer program comprising instructions, wherein execution of the program by a processing element is to cause the processing element to carry out the method, techniques, or process as described in or related to any of examples 1-47, or portions thereof.

Example Z12 may include a signal in a wireless network as shown and described herein.

Example Z13 may include a method of communicating in a wireless network as shown and described herein.

Example Z14 may include a system for providing wireless communication as shown and described herein.

Example Z15 may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

**Abbreviations**

Unless used differently herein, terms, definitions, and abbreviations may be consistent with terms, definitions, and abbreviations defined in 3GPP TR 21.905 v16.0.0 (2019-06). For the purposes of the present document, the following abbreviations may apply to the examples and embodiments discussed herein.

'3GPP' refers to Third Generation Partnership Project.
'4G' refers to Fourth Generation.
'5G' refers to Fifth Generation.
'5GC' refers to 5G Core network.
'AC' refers to Application Client.
'ACR' refers to Application Context Relocation.
'ACK' refers to Acknowledgement.
'ACID' refers to Application Client Identification.
'ADRF' refers to Analytics Data Repository Function.
'AF' refers to Application Function.
'AM' refers to Acknowledged Mode.
'AMBR' refers to Aggregate Maximum Bit Rate.
'AMF' refers to Access and Mobility Management Function.
'AN' refers to Access Network.
'AnLF' refers to Analytics Logical Function.
'ANR' refers to Automatic Neighbour Relation.
'AOA' refers to Angle of Arrival.
'AP' refers to Application Protocol, Antenna Port, Access Point.
'API' refers to Application Programming Interface.
'APN' refers to Access Point Name.
'ARP' refers to Allocation and Retention Priority.

'ARQ' refers to Automatic Repeat Request.
'AS' refers to Access Stratum.
'ASP' refers to Application Service Provider.
'ASN. 1' refers to Abstract Syntax Notation One.
'AUSF' refers to Authentication Server Function.
'AWGN' refers to Additive White Gaussian Noise.
'BAP' refers to Backhaul Adaptation Protocol.
'BCH' refers to Broadcast Channel.
'BER' refers to Bit Error Ratio.
'BFD' refers to Beam Failure Detection.
'BLER' refers to Block Error Rate.
'BPSK' refers to Binary Phase Shift Keying.
'BRAS' refers to Broadband Remote Access Server.
'BSS' refers to Business Support System.
'BS' refers to Base Station.
'BSR' refers to Buffer Status Report.
'BW' refers to Bandwidth.
'BWP' refers to Bandwidth Part.
'C-RNTI' refers to Cell Radio Network Temporary Identity.
'CA' refers to Carrier Aggregation, Certification Authority.
'CAPEX' refers to CAPital Expenditure.
'CBD' refers to Candidate Beam Detection.
'CBRA' refers to Contention Based Random Access.
'CC' refers to Component Carrier, Country Code, Cryptographic Checksum.
'CCA' refers to Clear Channel Assessment.
'CCE' refers to Control Channel Element.
'CCCH' refers to Common Control Channel.
'CE' refers to Coverage Enhancement.
'CDM' refers to Content Delivery Network.
'CDMA' refers to Code-Division Multiple Access.
'CDR' refers to Charging Data Request, Charging Data Response.
'CFRA' refers to Contention Free Random Access.
'CG' refers to Cell Group.
'CGF' refers to Charging Gateway Function.
'CHF' refers to Charging Function.
'CI' refers to Cell Identity.
'CID' refers to Cell-ID (e.g., positioning method).
'CIM' refers to Common Information Model.
'CIR' refers to Carrier to Interference Ratio.
'CK' refers to Cipher Key.
'CM' refers to Connection Management, Conditional Mandatory.
'CMAS' refers to Commercial Mobile Alert Service.
'CMD' refers to Command.
'CMS' refers to Cloud Management System.
'CO' refers to Conditional Optional.
'CoMP' refers to Coordinated Multi-Point.
'CORESET' refers to Control Resource Set.
'COTS' refers to Commercial Off-The-Shelf.
'CP' refers to Control Plane, Cyclic Prefix, Connection Point.
'CPD' refers to Connection Point Descriptor.
'CPE' refers to Customer Premise Equipment.
'CPICH' refers to Common Pilot Channel.
'CQI' refers to Channel Quality Indicator.
'CPU' refers to CSI processing unit, Central Processing Unit.
'C/R' refers to Command/Response field bit.
'CRAN' refers to Cloud Radio Access Network, Cloud RAN.
'CRB' refers to Common Resource Block.
'CRC' refers to Cyclic Redundancy Check.

'CRI' refers to Channel-State Information Resource Indicator, CSI-RS Resource Indicator.

'C-RNTI' refers to Cell RNTI.

'CS' refers to Circuit Switched.

'CSCF' refers to call session control function.

'CSAR' refers to Cloud Service Archive.

'CSI' refers to Channel-State Information.

'CSI-IM' refers to CSI Interference Measurement.

'CSI-RS' refers to CSI Reference Signal.

'CSI-RSRP' refers to CSI reference signal received power.

'CSI-RSRQ' refers to CSI reference signal received quality.

'CSI-SINR' refers to CSI signal-to-noise and interference ratio.

'CSMA' refers to Carrier Sense Multiple Access.

'CSMA/CA' refers to CSMA with collision avoidance.

'CSS' refers to Common Search Space, Cell-specific Search Space.

'CTF' refers to Charging Trigger Function.

'CTS' refers to Clear-to-Send.

'CW refers to Codeword.

'CWS' refers to Contention Window Size.

'D2D' refers to Device-to-Device.

'DC' refers to Dual Connectivity, Direct Current.

'DCI' refers to Downlink Control Information.

'DF' refers to Deployment Flavour.

'DL' refers to Downlink.

'DMTF' refers to Distributed Management Task Force.

'DPDK' refers to Data Plane Development Kit.

'DM-RS, DMRS' refers to Demodulation Reference Signal.

'DN' refers to Data network.

'DNN' refers to Data Network Name.

'DNAI' refers to Data Network Access Identifier.

'DRB' refers to Data Radio Bearer.

'DRS' refers to Discovery Reference Signal.

'DRX' refers to Discontinuous Reception.

'DSL' refers to Domain Specific Language, Digital Subscriber Line.

'DSLAM' refers to DSL Access Multiplexer.

'DwPTS' refers to Downlink Pilot Time Slot.

'E-LAN' refers to Ethernet Local Area Network.

'E2E' refers to End-to-End.

'EAS' refers to Edge Application Server.

'ECCA' refers to extended clear channel assessment, extended CCA.

'ECCE' refers to Enhanced Control Channel Element, Enhanced CCE.

'ED' refers to Energy Detection.

'EDGE' refers to Enhanced Datarates for GSM Evolution (GSM Evolution).

'EASID' refers to Edge Application Server Identification.

'ECS' refers to Edge Configuration Server.

'ECSP' refers to Edge Computing Service Provider.

'EDN' refers to Edge Data Network.

'EEC' refers to Edge Enabler Client.

'EECID' refers to Edge Enabler Client Identification.

'EES' refers to Edge Enabler Server.

'EESID' refers to Edge Enabler Server Identification.

'EHE' refers to Edge Hosting Environment.

'EGMF' refers to Exposure Governance Management Function.

'EGPRS' refers to Enhanced GPRS.

'EIR' refers to Equipment Identity Register.

'eLAA' refers to enhanced Licensed Assisted Access, enhanced LAA.

'EM' refers to Element Manager.

'eMBB' refers to Enhanced Mobile Broadband.

'EMS' refers to Element Management System.

'eNB' refers to evolved NodeB, E-UTRAN Node B.

'EN-DC' refers to E-UTRA-NR Dual Connectivity.

'EPC' refers to Evolved Packet Core.

'EPDCCH' refers to enhanced PDCCH, enhanced Physical Downlink Control Channel.

'EPRE' refers to Energy per resource element.

'EPS' refers to Evolved Packet System.

'EREG' refers to enhanced REG, enhanced resource element.

'ETSI' refers to European Telecommunications Standards Institute.

'ETWS' refers to Earthquake and Tsunami Warning System.

'eUICC' refers to embedded UICC, embedded Universal Integrated Circuit Card.

'E-UTRA' refers to Evolved UTRA.

'E-UTRAN' refers to Evolved UTRAN.

'EV2X' refers to Enhanced V2X.

'F1AP' refers to F1 Application Protocol.

'F1-C' refers to F1 Control plane interface.

'F1-U' refers to F1 User plane interface.

'FACCH' refers to Fast Associated Control Channel.

'FACCH/F' refers to Fast Associated Control Channel/Full rate.

'FACCH/H' refers to Fast Associated Control Channel/Half rate.

'FACH' refers to Forward Access Channel.

'FAUSCH' refers to Fast Uplink Signalling Channel.

'FB' refers to Functional Block.

'FBI' refers to Feedback Information.

'FCC' refers to Federal Communications Commission.

'FCCH' refers to Frequency Correction Channel.

'FDD' refers to Frequency Division Duplex.

'FDM' refers to Frequency Division Multiplex.

'FDMA' refers to Frequency Division Multiple Access.

'FE' refers to Front End.

'FEC' refers to Forward Error Correction.

'FFS' refers to For Further Study.

'FFT' refers to Fast Fourier Transformation.

'feLAA' refers to further enhanced Licensed Assisted Access, further enhanced LAA.

'FN' refers to Frame Number.

'FPGA' refers to Field-Programmable Gate Array.

'FR' refers to Frequency Range.

'FQDN' refers to Fully Qualified Domain Name.

'G-RNTI' refers to GERAN Radio Network Temporary Identity.

'GERAN' refers to GSM EDGE RAN, GSM EDGE Radio Access Network.

'GGSN' refers to Gateway GPRS Support Node.

'GLONASS' refers to GLObal'naya NAvigatsionnaya Sputnikovaya Sistema (Global Navigation Satellite System).

'gNB' refers to Next Generation NodeB.

'gNB-CU' refers to gNB-centralized unit, Next Generation NodeB centralized unit.

'gNB-DU' refers to gNB-distributed unit, Next Generation NodeB distributed unit.

'GNSS' refers to Global Navigation Satellite System.

'GPRS' refers to General Packet Radio Service.

'GPSI' refers to Generic Public Subscription Identifier.

'GSM' refers to Global System for Mobile Communications, Groupe Spécial Mobile.

'GTP' refers to GPRS Tunneling Protocol.

'GTP-U' refers to GPRS Tunnelling Protocol for User Plane.

'GTS' refers to Go To Sleep Signal (related to WUS).

'GUMMEI' refers to Globally Unique MME Identifier.

'GUTI' refers to Globally Unique Temporary UE Identity.

'HARQ' refers to Hybrid ARQ, Hybrid Automatic Repeat Request.

'HANDO' refers to Handover.

'HFN' refers to HyperFrame Number.

'HHO' refers to Hard Handover.

'HLR' refers to Home Location Register.

'HN' refers to Home Network.
'HO' refers to Handover.
'HPLMN' refers to Home Public Land Mobile Network.
'HSDPA' refers to High Speed Downlink Packet Access.
'HSN' refers to Hopping Sequence Number.
'HSPA' refers to High Speed Packet Access.
'HSS' refers to Home Subscriber Server.
'HSUPA' refers to High Speed Uplink Packet Access.
'HTTP' refers to Hyper Text Transfer Protocol.
'HTTPS' refers to Hyper Text Transfer Protocol Secure (https is http/1.1 over SSL, i.e. port 443).
'I-Block' refers to Information Block.
'ICCID' refers to Integrated Circuit Card Identification.
'IAB' refers to Integrated Access and Backhaul.
'ICIC' refers to Inter-Cell Interference Coordination.
'ID' refers to Identity, identifier.
'IDFT' refers to Inverse Discrete Fourier Transform.
'IE' refers to Information element.
'IBE' refers to In-Band Emission.
'IEEE' refers to Institute of Electrical and Electronics Engineers.
'IEI' refers to Information Element Identifier.
'IEIDL' refers to Information Element Identifier Data Length.
'IETF' refers to Internet Engineering Task Force.
'IF' refers to Infrastructure.
'IIOT' refers to Industrial Internet of Things.
'IM' refers to Interference Measurement, Intermodulation, IP Multimedia.
'IMC' refers to IMS Credentials.
'IMEI' refers to International Mobile Equipment Identity.
'IMGI' refers to International mobile group identity.
'INWI' refers to IP Multimedia Private Identity.
'IMPU' refers to IP Multimedia PUblic identity.
'IMS' refers to IP Multimedia Subsystem.
'IMSI' refers to International Mobile Subscriber Identity.
'IoT' refers to Internet of Things.
'IP' refers to Internet Protocol.
'Ipsec' refers to IP Security, Internet Protocol Security.
'IP-CAN' refers to IP-Connectivity Access Network.
'IP-M' refers to IP Multicast.
'IPv4' refers to Internet Protocol Version 4.
'IPv6' refers to Internet Protocol Version 6.
'IR' refers to Infrared.
'IS' refers to In Sync.
'IRP' refers to Integration Reference Point.
'ISDN' refers to Integrated Services Digital Network.
'ISIM' refers to IM Services Identity Module.
'ISO' refers to International Organisation for Standardisation.
'ISP' refers to Internet Service Provider.
'IWF' refers to Interworking-Function.
'I-WLAN' refers to Interworking WLAN.
'kB' refers to Kilobyte (1000 bytes).
'kbps' refers to kilo-bits per second.
'Kc' refers to Ciphering key.
'Ki' refers to Individual subscriber authentication key.
'KPI' refers to Key Performance Indicator.
'KQI' refers to Key Quality Indicator.
'KSI' refers to Key Set Identifier.
'ksps' refers to kilo-symbols per second.
'KVM' refers to Kernel Virtual Machine.
'L1' refers to Layer 1 (physical layer).

'L1-RSRP' refers to Layer 1 reference signal received power.

'L2' refers to Layer 2 (data link layer).

'L3' refers to Layer 3 (network layer).

'LAA' refers to Licensed Assisted Access.

'LAN' refers to Local Area Network.

'LADN' refers to Local Area Data Network.

'LBT' refers to Listen Before Talk.

'LCM' refers to LifeCycle Management.

'LCR' refers to Low Chip Rate.

'LCS' refers to Location Services.

'LCID' refers to Logical Channel ID.

'LI' refers to Layer Indicator.

'LLC' refers to Logical Link Control, Low Layer Compatibility.

'LMF' refers to Location Management Function.

'LOS' refers to Line of Sight.

'LPLMN' refers to Local PLMN.

'LPP' refers to LTE Positioning Protocol.

'LSB' refers to Least Significant Bit.

'LTE' refers to Long Term Evolution.

'LWA' refers to LTE-WLAN aggregation.

'LWIP' refers to LTE/WLAN Radio Level Integration with IPsec Tunnel.

'M2M' refers to Machine-to-Machine.

'MAC' refers to Medium Access Control (protocol layering context), Message authentication code (security/encryption context).

'MAC-A' refers to MAC used for authentication and key agreement (TSG T WG3 context).

'MAC-I' refers to MAC used for data integrity of signalling messages (TSG T WG3 context).

'MANO' refers to Management and Orchestration.

'MBMS' refers to Multimedia Broadcast and Multicast Service.

'MBSFN' refers to Multimedia Broadcast multicast service Single Frequency Network.

'MCC' refers to Mobile Country Code.

'MCG' refers to Master Cell Group.

'MCOT' refers to Maximum Channel Occupancy Time.

'MCS' refers to Modulation and coding scheme.

'MDAF' refers to Management Data Analytics Function.

'MDAS' refers to Management Data Analytics Service.

'MDT' refers to Minimization of Drive Tests.

'ME' refers to Mobile Equipment.

'MeNB' refers to master eNB.

'MER' refers to Message Error Ratio.

'MGL' refers to Measurement Gap Length.

'MGRP' refers to Measurement Gap Repetition Period.

'MIB' refers to Master Information Block, Management Information Base.

'MIMO' refers to Multiple Input Multiple Output.

'MLC' refers to Mobile Location Centre.

'MM' refers to Mobility Management.

'MME' refers to Mobility Management Entity.

'MN' refers to Master Node.

'MNO' refers to Mobile Network Operator.

'MO' refers to Measurement Object, Mobile Originated.

'MPBCH' refers to MTC Physical Broadcast Channel.

'MPDCCH' refers to MTC Physical Downlink Control Channel.

'MPDSCH' refers to MTC Physical Downlink Shared Channel.

'MPRACH' refers to MTC Physical Random Access Channel.

'MPUSCH' refers to MTC Physical Uplink Shared Channel.

'MPLS' refers to MultiProtocol Label Switching.

'MS' refers to Mobile Station.

'MSB' refers to Most Significant Bit.

'MSC' refers to Mobile Switching Centre.

'MSI' refers to Minimum System Information, MCH Scheduling Information.

'MSID' refers to Mobile Station Identifier.

'MSIN' refers to Mobile Station Identification Number.

'MSISDN' refers to Mobile Subscriber ISDN Number.

'MT' refers to Mobile Terminated, Mobile Termination.

'MTC' refers to Machine-Type Communications.

'MTLF' refers to Model Training Logical Functions.

'mMTC' refers to massive MTC, massive Machine-Type Communications.

'MU-MIMO' refers to Multi User MIMO.

'MWUS' refers to MTC wake-up signal, MTC WUS.

'NACK' refers to Negative Acknowledgement.

'NAI' refers to Network Access Identifier.

'NAS' refers to Non-Access Stratum, Non-Access Stratum layer.

'NCT' refers to Network Connectivity Topology.

'NC-JT' refers to Non-Coherent Joint Transmission.

'NEC' refers to Network Capability Exposure.

'NE-DC' refers to NR-E-UTRA Dual Connectivity.

'NEF' refers to Network Exposure Function.

'NF' refers to Network Function.

'NFP' refers to Network Forwarding Path.

'NFPD' refers to Network Forwarding Path Descriptor.

'NFV' refers to Network Functions Virtualization.

'NFVI' refers to NFV Infrastructure.

'NFVO' refers to NFV Orchestrator.

'NG' refers to Next Generation, Next Gen.

'NGEN-DC' refers to NG-RAN E-UTRA-NR Dual Connectivity.

'NM' refers to Network Manager.

'NMS' refers to Network Management System.

'N-PoP' refers to Network Point of Presence.

'NMIB, N-MIB' refers to Narrowband MIB.

'NPBCH' refers to Narrowband Physical Broadcast Channel.

'NPDCCH' refers to Narrowband Physical Downlink Control Channel.

'NPDSCH' refers to Narrowband Physical Downlink Shared Channel.

'NPRACH' refers to Narrowband Physical Random Access Channel.

'NPUSCH' refers to Narrowband Physical Uplink Shared Channel.

'NPSS' refers to Narrowband Primary Synchronization Signal.

'NSSS' refers to Narrowband Secondary Synchronization Signal.

'NR' refers to New Radio, Neighbour Relation.

'NRF' refers to NF Repository Function.

'NRS' refers to Narrowband Reference Signal.

'NS' refers to Network Service.

'NSA' refers to Non-Standalone operation mode.

'NSD' refers to Network Service Descriptor.

'NSR' refers to Network Service Record.

'NSSAI' refers to Network Slice Selection Assistance Information.

'S-NNSAI' refers to Single-NSSAI.

'NSSF' refers to Network Slice Selection Function.

'NW' refers to Network.

'NWDAF' refers to Network Data Analytics Function.

'NWUS' refers to Narrowband wake-up signal, Narrowband WUS.

'NZP' refers to Non-Zero Power.

'O&M' refers to Operation and Maintenance.

'ODU2' refers to Optical channel Data Unit - type 2.

'OFDM' refers to Orthogonal Frequency Division Multiplexing.

'OFDMA' refers to Orthogonal Frequency Division Multiple Access.

'OOB' refers to Out-of-band.

'OOS' refers to Out of Sync.

'OPEX' refers to OPerating EXpense.

'OSI' refers to Other System Information.
'OSS' refers to Operations Support System.
'OTA' refers to over-the-air.
'PAPR' refers to Peak-to-Average Power Ratio.
'PAR' refers to Peak to Average Ratio.
'PBCH' refers to Physical Broadcast Channel.
'PC' refers to Power Control, Personal Computer.
'PCC' refers to Primary Component Carrier, Primary CC.
'P-CSCF' refers to Proxy CSCF.
'PCell' refers to Primary Cell.
'PCI' refers to Physical Cell ID, Physical Cell Identity.
'PCEF' refers to Policy and Charging Enforcement Function.
'PCF' refers to Policy Control Function.
'PCRF' refers to Policy Control and Charging Rules Function.
'PDCP' refers to Packet Data Convergence Protocol, Packet Data Convergence Protocol layer.
'PDCCH' refers to Physical Downlink Control Channel.
'PDN' refers to Packet Data Network, Public Data Network.
'PDSCH' refers to Physical Downlink Shared Channel.
'PDU' refers to Protocol Data Unit.
'PEI' refers to Permanent Equipment Identifiers.
'PFD' refers to Packet Flow Description.
'P-GW' refers to PDN Gateway.
'PHICH' refers to Physical hybrid-ARQ indicator channel.
'PHY' refers to Physical layer.
'PLMN' refers to Public Land Mobile Network.
'PIN' refers to Personal Identification Number.
'PM' refers to Performance Measurement.
'PMI' refers to Precoding Matrix Indicator.
'PNF' refers to Physical Network Function.
'PNFD' refers to Physical Network Function Descriptor.
'PNFR' refers to Physical Network Function Record.
'POC' refers to PTT over Cellular.
'PP, PTP' refers to Point-to-Point.
'PPP' refers to Point-to-Point Protocol.
'PRACH' refers to Physical RACH.
'PRB' refers to Physical resource block.
'PRG' refers to Physical resource block group.
'ProSe' refers to Proximity Services, Proximity-Based Service.
'PRS' refers to Positioning Reference Signal.
'PRR' refers to Packet Reception Radio.
'PS' refers to Packet Services.
'PSBCH' refers to Physical Sidelink Broadcast Channel.
'PSDCH' refers to Physical Sidelink Downlink Channel.
'PSCCH' refers to Physical Sidelink Control Channel.
'PSSCH' refers to Physical Sidelink Shared Channel.
'PSFCH' refers to physical sidelink feedback channel.
'PSCell' refers to Primary SCell.
'PSS' refers to Primary Synchronization Signal.
'PSTN' refers to Public Switched Telephone Network.
'PT-RS' refers to Phase-tracking reference signal.
'PTT' refers to Push-to-Talk.
'PUCCH' refers to Physical Uplink Control Channel.
'PUSCH' refers to Physical Uplink Shared Channel.
'QAM' refers to Quadrature Amplitude Modulation.
'QCI' refers to QoS class of identifier.
'QCL' refers to Quasi co-location.
'QFI' refers to QoS Flow ID, QoS Flow Identifier.
'QoS' refers to Quality of Service.

'QPSK' refers to Quadrature (Quaternary) Phase Shift Keying.
'QZSS' refers to Quasi-Zenith Satellite System.
'RA-RNTI' refers to Random Access RNTI.
'RAB' refers to Radio Access Bearer, Random Access Burst.
'RACH' refers to Random Access Channel.
'RADIUS' refers to Remote Authentication Dial In User Service.
'RAN' refers to Radio Access Network.
'RAND' refers to RANDom number (used for authentication).
'RAR' refers to Random Access Response.
'RAT' refers to Radio Access Technology.
'RAU' refers to Routing Area Update.
'RB' refers to Resource block, Radio Bearer.
'RBG' refers to Resource block group.
'REG' refers to Resource Element Group.
'Rel' refers to Release.
'REQ' refers to REQuest.
'RF' refers to Radio Frequency.
'RI' refers to Rank Indicator.
'RIV' refers to Resource indicator value.
'RL' refers to Radio Link.
'RLC' refers to Radio Link Control, Radio Link Control layer.
'RLC AM' refers to RLC Acknowledged Mode.
'RLC UM' refers to RLC Unacknowledged Mode.
'RLF' refers to Radio Link Failure.
'RLM' refers to Radio Link Monitoring.
'RLM-RS' refers to Reference Signal for RLM.
'RM' refers to Registration Management.
'RMC' refers to Reference Measurement Channel.
'RMSI' refers to Remaining MSI, Remaining Minimum System Information.
'RN' refers to Relay Node.
'RNC' refers to Radio Network Controller.
'RNL' refers to Radio Network Layer.
'RNTI' refers to Radio Network Temporary Identifier.
'ROHC' refers to RObust Header Compression.
'RRC' refers to Radio Resource Control, Radio Resource Control layer.
'RRM' refers to Radio Resource Management.
'RS' refers to Reference Signal.
'RSRP' refers to Reference Signal Received Power.
'RSRQ' refers to Reference Signal Received Quality.
'RSSI' refers to Received Signal Strength Indicator.
'RSU' refers to Road Side Unit.
'RSTD' refers to Reference Signal Time difference.
'RTP' refers to Real Time Protocol.
'RTS' refers to Ready-To-Send.
'RTT' refers to Round Trip Time.
'Rx' refers to Reception, Receiving, Receiver.
'S1AP' refers to S1 Application Protocol.
'S1-MME' refers to S1 for the control plane.
'S1-U' refers to S1 for the user plane.
'S-CSCF' refers to serving CSCF.
'S-GW' refers to Serving Gateway.
'S-RNTI' refers to SRNC Radio Network Temporary Identity.
'S-TMSI' refers to SAE Temporary Mobile Station Identifier.
'SA' refers to Standalone operation mode.
'SAE' refers to System Architecture Evolution.
'SAP' refers to Service Access Point.
'SAPD' refers to Service Access Point Descriptor.
'SAPI' refers to Service Access Point Identifier.

'SCC' refers to Secondary Component Carrier, Secondary CC.

'SCell' refers to Secondary Cell.

'SCEF' refers to Service Capability Exposure Function.

'SC-FDMA' refers to Single Carrier Frequency Division Multiple Access.

'SCG' refers to Secondary Cell Group.

'SCM' refers to Security Context Management.

'SCS' refers to Subcarrier Spacing.

'SCTP' refers to Stream Control Transmission Protocol.

'SDAP' refers to Service Data Adaptation Protocol, Service Data Adaptation Protocol layer.

'SDL' refers to Supplementary Downlink.

'SDNF' refers to Structured Data Storage Network Function.

'SDP' refers to Session Description Protocol.

'SDSF' refers to Structured Data Storage Function.

'SDT' refers to Small Data Transmission.

'SDU' refers to Service Data Unit.

'SEAF' refers to Security Anchor Function.

'SeNB' refers to secondary eNB.

'SEPP' refers to Security Edge Protection Proxy.

'SFI' refers to Slot format indication.

'SFTD' refers to Space-Frequency Time Diversity, SFN and frame timing difference.

'SFN' refers to System Frame Number.

'SgNB' refers to Secondary gNB.

'SGSN' refers to Serving GPRS Support Node.

'S-GW' refers to Serving Gateway.

'SI' refers to System Information.

'SI-RNTI' refers to System Information RNTI.

'SIB' refers to System Information Block.

'SIM' refers to Subscriber Identity Module.

'SIP' refers to Session Initiated Protocol.

'SiP' refers to System in Package.

'SL' refers to Sidelink.

'SLA' refers to Service Level Agreement.

'SM' refers to Session Management.

'SMF' refers to Session Management Function.

'SMS' refers to Short Message Service.

'SMSF' refers to SMS Function.

'SMTC' refers to SSB-based Measurement Timing Configuration.

'SN' refers to Secondary Node, Sequence Number.

'SoC' refers to System on Chip.

'SON' refers to Self-Organizing Network.

'SpCell' refers to Special Cell.

'SP-CSI-RNTI' refers to Semi-Persistent CSI RNTI.

'SPS' refers to Semi-Persistent Scheduling.

'SQN' refers to Sequence number.

'SR' refers to Scheduling Request.

'SRB' refers to Signalling Radio Bearer.

'SRS' refers to Sounding Reference Signal.

'SS' refers to Synchronization Signal.

'SSB' refers to Synchronization Signal Block.

'SSID' refers to Service Set Identifier.

'SS/PBCH Block' refers to SS/PBCH Block.

'SSBRI' refers to SS/PBCH Block Resource Indicator, Synchronization Signal Block Resource Indicator.

'SSC' refers to Session and Service Continuity.

'SS-RSRP' refers to Synchronization Signal based Reference Signal Received Power.

'SS-RSRQ' refers to Synchronization Signal based Reference Signal Received Quality.

'SS-SINR' refers to Synchronization Signal based Signal to Noise and Interference Ratio.

'SSS' refers to Secondary Synchronization Signal.

'SSSG' refers to Search Space Set Group.

'SSSIF' refers to Search Space Set Indicator.

'SST' refers to Slice/Service Types.

'SU-MIMO' refers to Single User MIMO.

'SUL' refers to Supplementary Uplink.

'TA' refers to Timing Advance, Tracking Area.

'TAC' refers to Tracking Area Code.

'TAG' refers to Timing Advance Group.

'TAI' refers to Tracking Area Identity.

'TAU' refers to Tracking Area Update.

'TB' refers to Transport Block.

'TBS' refers to Transport Block Size.

'TBD' refers to To Be Defined.

'TCI' refers to Transmission Configuration Indicator.

'TCP' refers to Transmission Communication Protocol.

'TDD' refers to Time Division Duplex.

'TDM' refers to Time Division Multiplexing.

'TDMA' refers to Time Division Multiple Access.

'TE' refers to Terminal Equipment.

'TEID' refers to Tunnel End Point Identifier.

'TFT' refers to Traffic Flow Template.

'TMSI' refers to Temporary Mobile Subscriber Identity.

'TNL' refers to Transport Network Layer.

'TPC' refers to Transmit Power Control.

'TPMI' refers to Transmitted Precoding Matrix Indicator.

'TR' refers to Technical Report.

'TRP, TRxP' refers to Transmission Reception Point.

'TRS' refers to Tracking Reference Signal.

'TRx' refers to Transceiver.

'TS' refers to Technical Specifications, Technical Standard.

'TTI' refers to Transmission Time Interval.

'Tx' refers to Transmission, Transmitting, Transmitter.

'U-RNTI' refers to UTRAN Radio Network Temporary Identity.

'UART' refers to Universal Asynchronous Receiver and Transmitter.

'UCI' refers to Uplink Control Information.

'UE' refers to User Equipment.

'UDM' refers to Unified Data Management.

'UDP' refers to User Datagram Protocol.

'UDSF' refers to Unstructured Data Storage Network Function.

'UICC' refers to Universal Integrated Circuit Card.

'UL' refers to Uplink.

'UM' refers to Unacknowledged Mode.

'UML' refers to Unified Modelling Language.

'UMTS' refers to Universal Mobile Telecommunications System.

'UP' refers to User Plane.

'UPF' refers to User Plane Function.

'URI' refers to Uniform Resource Identifier.

'URL' refers to Uniform Resource Locator.

'URLLC' refers to Ultra-Reliable and Low Latency.

'USB' refers to Universal Serial Bus.

'USIM' refers to Universal Subscriber Identity Module.

'USS' refers to UE-specific search space.

'UTRA' refers to UMTS Terrestrial Radio Access.

'UTRAN' refers to Universal Terrestrial Radio Access Network.

'UwPTS' refers to Uplink Pilot Time Slot.

'V2I' refers to Vehicle-to-Infrastructure.

'V2P' refers to Vehicle-to-Pedestrian.

'V2V' refers to Vehicle-to-Vehicle.

'V2X' refers to Vehicle-to-everything.

'VIM' refers to Virtualized Infrastructure Manager.
'VL' refers to Virtual Link.
'VLAN' refers to Virtual LAN, Virtual Local Area Network.
'VM' refers to Virtual Machine.
'VNF' refers to Virtualized Network Function.
'VNFFG' refers to VNF Forwarding Graph.
'VNFFGD' refers to VNF Forwarding Graph Descriptor.
'VNFM' refers to VNF Manager.
'VoIP' refers to Voice-over-IP, Voice-over-Internet Protocol.
'VPLMN' refers to Visited Public Land Mobile Network.
'VPN' refers to Virtual Private Network.
'VRB' refers to Virtual Resource Block.
'WiMAX' refers to Worldwide Interoperability for Microwave Access.
'WLAN' refers to Wireless Local Area Network.
'WMAN' refers to Wireless Metropolitan Area Network.
'WPAN' refers to Wireless Personal Area Network.
'X2-C' refers to X2-Control plane.
'X2-U' refers to X2-User plane.
'XML' refers to eXtensible Markup Language.
'XRES' refers to EXpected user RESponse.
'XOR' refers to eXclusive OR.
'ZC' refers to Zadoff-Chu.
'ZP' refers to Zero Power.

For the purposes of the present document, the following terms and definitions are applicable to the examples and embodiments discussed herein.

The term "application" may refer to a complete and deployable package, environment to achieve a certain function in an operational environment. The term "AI/ML application" or the like may be an application that contains some AI/ML models and application-level descriptions.

The term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, and/or transferring digital data. Processing circuitry may include one or more processing cores to execute instructions and one or more memory structures to store program and data information. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computer-executable instructions, such as program code, software modules, and/or functional processes. Processing circuitry may include more hardware accelerators, which may be microprocessors, programmable processing devices, or the like. The one or more hardware accelerators may include, for example, computer vision (CV) and/or deep learning (DL) accelerators. The terms "application circuitry" and/or "baseband circuitry" may be considered synonymous to, and may be referred to as, "processor circuitry."

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized VNF, NFVI, and/or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence of an object, which may occur, for example, during execution of program code.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

The term "information element" refers to a structural element containing one or more fields. The term "field" refers to individual contents of an information element, or a data element that contains content.

The term "SMTC" refers to an SSB-based measurement timing configuration configured by *SSB-MeasurementTimingConfiguration.*

The term "SSB" refers to an SS/PBCH block.

The term "a "Primary Cell" refers to the MCG cell, operating on the primary frequency, in which the UE either performs the initial connection establishment procedure or initiates the connection re-establishment procedure.

The term "Primary SCG Cell" refers to the SCG cell in which the UE performs random access when performing the Reconfiguration with Sync procedure for DC operation.

The term "Secondary Cell" refers to a cell providing additional radio resources on top of a Special Cell for a UE configured with CA.

The term "Secondary Cell Group" refers to the subset of serving cells comprising the PSCell and zero or more secondary cells for a UE configured with DC.

The term "Serving Cell" refers to the primary cell for a UE in RRC_CONNECTED not configured with CA/DC there is only one serving cell comprising of the primary cell.

The term "serving cell" or "serving cells" refers to the set of cells comprising the Special Cell(s) and all secondary cells for a UE in RRC_CONNECTED configured with CA/.

The term "Special Cell" refers to the PCell of the MCG or the PSCell of the SCG for DC operation; otherwise, the term "Special Cell" refers to the Pcell.

The term "machine learning" or "ML" refers to the use of computer systems implementing algorithms and/or statistical models to perform specific task(s) without using explicit instructions, but instead relying on patterns and inferences. ML algorithms build or estimate mathematical model(s) (referred to as "ML models" or the like) based on sample data (referred to as "training data," "model training information," or the like) in order to make predictions or decisions without being explicitly programmed to perform such tasks. Generally, an ML algorithm is a computer program that learns from experience with respect to some task and some performance measure, and an ML model may be any object or data structure created after an ML algorithm is trained with one or more training datasets. After training, an ML model may be used to make predictions on new datasets. Although the term "ML algorithm" refers to different concepts than the term "ML model," these terms as discussed herein may be used interchangeably for the purposes of the present disclosure.

The term "machine learning model," "ML model," or the like may also refer to ML methods and concepts used by an ML-assisted solution. An "MI,-assisted solution" is a solution that addresses a specific use case using ML algorithms during operation. ML models include supervised learning (e.g., linear regression, k-nearest neighbor (KNN), descision tree algorithms, support machine vectors, Bayesian algorithm, ensemble algorithms, etc.) unsupervised learning (e.g., K-means clustering, principle component analysis (PCA), etc.), reinforcement learning (e.g., Q-learning, multi-armed bandit learning, deep RL, etc.), neural networks, and the like. Depending on the implementation a specific ML model could have many sub-models as components and the ML model may train all sub-models together. Separately trained ML models can also be chained together in an ML pipeline during inference. An "ML pipeline" is a set of functionalities, functions, or functional entities specific for an ML-assisted solution; an ML pipeline may include one or several data sources in a data pipeline, a model training pipeline, a model evaluation pipeline, and an actor. The "actor" is an entity that hosts an ML assisted solution using the output of the ML model inference). The term "ML training host" refers to an entity, such as a network function, that hosts the training of the model. The term "ML inference host" refers to an entity, such as a network function, that hosts model during inference mode (which includes both the model execution as well as any online learning if applicable). The ML-host informs the actor about the output of the ML algorithm, and the actor takes a decision for an action (an "action" is performed by an actor as a result of the output of an ML assisted solution). The term "model inference information" refers to information used as an input to the ML model for determining inference(s); the data used to train an ML model and the data used to determine inferences may overlap, however, "training data" and "inference data" refer to different concepts.

## Claims

1. A method of spatial compression performed in a Radio Unit for Multiple-Input Multiple Output, MIMO, the spatial compression is determined from a number of antennas to a number of streams in one or more stages, the method comprising:

   computing an antenna covariance matrix from a received signal over multiple resource elements;
   performing matrix decomposition based on the computed covariance matrix to produce one or more compression vector; and
   generating a spatially-compressed signal by performing spatial compression on the matrix decomposition.

2. The method of claim 1,
   wherein generating the spatial compression performing at least one stage of spatial compression comprising determining a spatial compression matrix, wherein determining the spatial compression matrix comprises:

   initializing the spatial compression matrix as an empty matrix;
   performing for a number of iterations:

   obtaining a new respective compression vector from the matrix decomposition of the computed covariance matrix, and
   appending the compression vector to the spatial compression matrix.

3. The method of claim 2,

wherein performing the at least one stage comprises performing a first in-order stage of the spatial compression, wherein for the first in-order stage of the spatial compression, the computed covariance matrix is computed over multiple resource elements.

4. The method of claim 3,

wherein performing at least one stage comprises performing a second in-order stage of the spatial compression, wherein for the second-in order stage of the spatial compression, the computed covariance matrix is computed over is computed over a subsets of resource elements comprising symbols on time and/or subcarriers in frequency subcarriers.

5. The method of claim 4,
wherein performing at least one stage comprises performing a third in-order stage of the spatial compression.

6. The method of any of claims 2 to 5,
wherein the number of iterations is equal to a total number of streams.

7. The method of any of claims 2 to 5,
wherein the number of iterations is less than a maximum number of streams per user.

8. The method of claim 7,
wherein the number of iterations is based on an effective channel power of per user relative to a first predefined threshold.

9. The method of claim 7,
wherein the number of iterations is based on a total captured energy of each user relative to a second predefined threshold.

10. The method of any of claims 1 to 9, wherein performing the matrix decomposition based on the computed covariance matrix to produce one or more compression vectors comprises:
performing a QR decomposition of the covariance matrix.

11. The method of any of claims 1 to 9,
wherein performing the matrix decomposition based on the computed covariance matrix to produce one or more compression vectors comprises applying a Gram-Schmidt method.

12. The method of any of claims 1 to 9,
wherein performing the matrix decomposition based on the computed covariance matrix to produce one or more compression vectors comprises using column sorting.

13. The method of any of claims 1 to 9,
wherein performing the matrix decomposition based on the computed covariance matrix to produce one or more compression vectors comprises using a Householder transformation.

14. The method of any of claims 1to 9,
wherein performing the matrix decomposition based on the computed covariance matrix to produce one or more compression vectors comprises using one or more iterations of a power method.

15. The method of any of claims 1 to 14, further comprising:
transmitting the spatially-compressed signal over a fronthaul interface to a Distributed Unit.

100

**RU** 150

CP + FFT

RE de- map

PUSCH + DMRS

SRS

Spatial compr

**DU** 110

Equalizer

Demap, decode etc

Compute spatial compression

FIG. 1

200A

EP 4 507 210 A1

FIG. 2A

FIG. 2B

FIG. 3

FIG. 4A

FIG. 4B

EP 4 507 210 A1

4x2-layer PUSCH, CDL-B 30ns DS, 64 antennas, 64QAM 0pt75, mobility (50Hz, 40-slot SRS period), non-ideal SRS/DMRS CE, 4RB

Legend:
- no spatial compression
- proposed RU compr to 12, QR, covar over 3 syms
- proposed RU compr to 16, QR, covar over 3 syms
- legacy SRS-based compr to 16, Eigen, time av 8, freq av 4 RB

x-axis: SNR (dB)
y-axis: PUSCH BLER

FIG. 5

EP 4 507 210 A1

FIG. 6

EP 4 507 210 A1

FIG. 7A

FIG. 7B

FIG. 8

FIG. 9

**QRD Performance, Nr = 32**

FIG. 10

FIG. 11

**RU 150**

CP + FFT → RE de- map → SRS

Compute Covariance

V based on QR

Spatial compr

Optional number of streams

Optional compression matrix

**DU 110**

de- compress → Beam- forming

FIG. 12

FIG. 13

FIG. 14

1400

UE 1402

Host platform 1414

Application Processing Circuitry 1412

Modem platform 1410

Protocol Processing Circuitry 1414

Digital Baseband Circuitry 1416

Transmit Circuitry 1418

Receive Circuitry 1420

Radio Frequency Circuitry 1422

RFFE 1424

1426

1406

AN 1404

Host platform 1428

Application Processing Circuitry 1432

Modem platform 1430

Protocol Processing Circuitry 1434

Digital Baseband Circuitry 1436

Transmit Circuitry 1438

Receive Circuitry 1440

RF Circuitry 1442

RFFE 1444

1446

FIG. 15

EP 4 507 210 A1

FIG. 16

EP 4 507 210 A1

FIG. 17

FIG. 18

EP 4 507 210 A1

61

FIG. 19

EP 4 507 210 A1

Computing, based on a received signal, an antenna
covariance matrix
2001

Performing a matrix decomposition based on the
computed antenna covariance matrix to generate a
decomposition output
2002

Selecting at least one column from the decomposition
output
2003

Performing spatial compression of the received signal
based on the at least one column to generate a
spatially-compressed signal
2004

Transmitting the spatially-compressed signal over a
fronthaul interface to a DU
2005

FIG. 20

Identifying, from a RU over a fronthaul interface, a
spatially-compressed signal
2101

Processing the spatially-compressed signal,
wherein the spatially-compressed signal was
generated by a RU-related method at the RU
2102

FIG. 21

**EUROPEAN SEARCH REPORT**

Application Number

EP 24 19 3843

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/416868 A1 (SCHRECK JAN [US] ET AL) 29 December 2022 (2022-12-29) | 1-3,6, 10-15 | INV. H04B7/0426 |
| Y | * paragraph [0132] - paragraph [0139] * | 7-9 | H04B7/06 |
| A | * paragraphs [0019], [0044] - paragraph [0046] * <br> * paragraph [0054] - paragraph [0056] * <br> * paragraphs [0033], [0037] * | 4,5 | |
| | ----- | | |
| Y | WO 2020/170267 A1 (INDIAN INSTITUTE OF TECH MADRAS [IN]) 27 August 2020 (2020-08-27) | 7-9 | |
| A | * paragraphs [0091], [0103] - paragraph [0114]; figures 5,6 * | 4,5 | |
| | ----- | | |
| A | WO 2014/055294 A1 (REARDEN LLC [US]) 10 April 2014 (2014-04-10) * page 363 * | 1-15 | |
| | ----- | | |

**TECHNICAL FIELDS SEARCHED (IPC)**

H04B

The present search report has been drawn up for all claims

| Place of search | Date of completion of the search | Examiner |
|---|---|---|
| Munich | 10 December 2024 | Oana, Andrei |

EPO FORM 1503 03.82 (P04C01)

## ANNEX TO THE EUROPEAN SEARCH REPORT
## ON EUROPEAN PATENT APPLICATION NO.

EP 24 19 3843

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2024

| Patent document cited in search report | Publication date | Patent family member(s) | Publication date |
|---|---|---|---|
| US 2022416868 A1 | 29-12-2022 | DE 102022113121 A1 | 29-12-2022 |
| | | US 2022416868 A1 | 29-12-2022 |
| WO 2020170267 A1 | 27-08-2020 | NONE | |
| WO 2014055294 A1 | 10-04-2014 | AU 2013327697 A1 | 09-04-2015 |
| | | BR 112015006662 A2 | 04-07-2017 |
| | | CA 2885817 A1 | 10-04-2014 |
| | | EP 2904814 A1 | 12-08-2015 |
| | | MX 352930 B | 14-12-2017 |
| | | TW 201427318 A | 01-07-2014 |
| | | WO 2014055294 A1 | 10-04-2014 |

EPO FORM P0459

For more details about this annex : see Official Journal of the European Patent Office, No. 12/82